# EUROPÄISCHE PATENTSCHRIFT

(11) **EP 1 709 722 B1**
(45) Veröffentlichungstag und Bekanntmachung des Hinweises auf die Patenterteilung: **24.08.2016**
(21) Anmeldenummer: 05701096.9
(22) Anmeldetag: 21.01.2005
(51) Int. Cl.: H02K 1/27, H02K 41/03

(54) **SEGMENTMOTOR**
SEGMENT MOTOR
MOTEUR SEGMENTE

(30) Priorität: 23.01.2004 DE 102004003730
(43) Veröffentlichungstag der Anmeldung: 11.10.2006
(73) Patentinhaber: Leiber, Heinz, 71739 Oberriexingen (DE); Leiber, Thomas, 81925 München (DE)
(72) Erfinder: Leiber, Heinz, 71739 Oberriexingen (DE); Leiber, Thomas, 81925 München (DE)
(74) Vertreter: Lenzing Gerber Stute
(86) Internationale Anmeldenummer: PCT/EP2005/000567
(87) Internationale Veröffentlichungsnummer: WO 2005/071817

(56) Entgegenhaltungen:
- WO-A-00/44084
- WO-A-02/093719
- DE-A1- 19 954 592
- FR-A- 2 668 646
- US-A- 4 739 430
- US-A- 4 985 652
- US-A- 5 521 451
- US-A- 5 559 378
- US-B1- 6 313 553
- PATENT ABSTRACTS OF JAPAN Bd. 2003, Nr. 11, 5. November 2003 (2003-11-05) -& JP 2003 189577 A (MIKUNI CORP), 4. Juli 2003 (2003-07-04)
- PAWLAK A M ET AL: "ROTARY ACTUATORS WITH MULTIPOLE RING MAGNETS" IEEE TRANSACTIONS ON INDUSTRY APPLICATIONS, IEEE INC. NEW YORK, US, Bd. 31, Nr. 6, 1. November 1995 (1995-11-01), Seiten 1306-1314, XP000550014 ISSN: 0093-9994
- PATENT ABSTRACTS OF JAPAN Bd. 2002, Nr. 03, 3. April 2002 (2002-04-03) -& JP 2001 327142 A (MIKUNI CORP), 22. November 2001 (2001-11-22)
- PATENT ABSTRACTS OF JAPAN Bd. 2000, Nr. 04, 31. August 2000 (2000-08-31) -& JP 2000 014062 A (DENSO CORP), 14. Januar 2000 (2000-01-14)
- PATENT ABSTRACTS OF JAPAN Bd. 2000, Nr. 15, 6. April 2001 (2001-04-06) -& JP 2000 341927 A (DENSO CORP), 8. Dezember 2000 (2000-12-08)

## Beschreibung

Die Erfindung betrifft einen Segmentmotor zur Erzeugung einer Schwenkbewegung welche in eine Linearbewegung umgewandelt wird.

Derartige Segmentmotoren werden beispielsweise, jedoch keineswegs ausschließlich, zum Antrieb von Ventilen in Verbrennungsmotoren eingesetzt.

Ein Segmentmotor im Sinne dieser Erfindung ist definiert als Verstellmotor/-aktuator, der im Betrieb nur mit einem festen Verstellweg oder einem festen Verstellwinkel betrieben wird. Unter den Begriff Segmentmotor fallen erfindungsgemäß sowohl Schwenksegmentmotoren als auch Linearsegmentmotoren.

Ein Schwenksegmentmotor im Sinne der Erfindung ist dadurch gekennzeichnet, dass der Motor eine Drehbewegung durchführt für einen festen Verstellwinkel. Der Segmentmotor ist ferner dadurch charakterisiert, dass er einen feststehenden Stator und einen drehbar oder schwenkbar gelagerten Rotor aufweist. Die Drehbewegung wird in der Regel über ein Kopplungsglied in eine Drehbewegung oder Linearbewegung umgewandelt. Drehsegmentmotoren sind beispielsweise aus WO00/39435 A1 bekannt.

Aus WO 00/44084 ist ein elektrischer Segmentmotor zur Erzeugung einer Schwenkbewegung mit einem feststehenden Außenstator und einem schwenkbar gelagerten Rotor bekannt, wobei der Außenstator einen von elektrischen Erregerspulen erregten Magnetkreis aufweist, und wobei an einem kreissegmentförmigen Wandungsabschnitt des Rotors Permanentmagnetelemente befestigt sind.

Aus US-A-5 559 378 und JP 2000 341927 A ist es ferner bekannt, in kleinen Permanentmagnetaktuatoren den magnetischen Rückschluss für die Magnete entweder als bewegtes Teil oder als feststehendes Teil auszuführen.

Ein Linearsegmentmotor im Sinne der Erfindung ist dadurch gekennzeichnet, dass der Motor eine Linearbewegung für einen festen definierten Verstellweg durchführt. Der Linearsegmentmotor ist ferner dadurch charakterisiert, dass er einen feststehenden Stator und einen linear beweglichen Läufer aufweist.

Die Linearbewegung eines Linearsegmentmotors wird in der Regel direkt auf ein Stellglied übertragen. Linearsegmentmotoren sind aus DE 102004003730 und DE 10125767 bekannt.

Rotoren werden teilweise auch als Läufer bezeichnet, weshalb die Begriffe Rotor und Läufer nachfolgend als gleichbedeutend benutzt werden.

Durch die Schwenkbewegung des Rotors wird die Wirkbewegung des Segmentmotors erzeugt. Im Stator ist zumindest ein Magnetkreis vorgesehen, der beispielsweise aus Weicheisenelementen bestehen kann. Dieser Magnetkreis wird mit zumindest einer Erregerspule erregt, um dadurch ein geeignetes Magnetfeld im Stator aufzubauen. An einem Wandungsabschnitt des Rotors, der insbesondere kreissegmentförmig ausgebildet sein kann, sind zumindest zwei Permanentmagnetelemente befestigt. Sobald der Magnetkreis im Stator erregt wird, richten sich die Permanentmagnetelemente des Rotors in diesem Magnetfeld aus und bewirken dadurch die gewünschte alternierende Wirkbewegung des Segmentmotors, die zum Antrieb nachgeordneter Funktionselemente, beispielsweise eines Ventils in einem Verbrennungsmotor, genutzt werden kann.

Ein weiterer Segmentmotor ist zudem aus der WO00/39435 A1 bekannt. Bei dem dort beschriebenen Segmentmotor wird der Rotor von einem kreissegmentförmigen Eisenkern gebildet, an dessen Außenseite ein Permanentmagnetring befestigt ist.

Ausgehend von diesem Stand der Technik ist es Aufgabe der vorliegenden Erfindung, einen Segmentmotor mit möglichst hohem Wirkungsgrad und sehr hoher Bewegungsdynamik bereitzustellen.

Diese Aufgabe wird durch einen Segmentmotor nach der Lehre des Anspruchs 1 gelöst.

Vorteilhafte Ausführungsformen der Erfindung sind Gegenstand der Unteransprüche.

Der erfindungsgemäße Antrieb beruht auf der Grundidee, dass der Läufer jedes Segmentmotors, insbesondere der schwenkbare Rotor eine möglichst geringe Masse aufweisen soll, da die Bewegungsdynamik des Segmentmotors weitgehend von den Massekräften des Läufers bzw. Rotors abhängt, die bei jeder Änderung der Bewegungsrichtung zur Beschleunigung des Läufer bzw. Rotors aufgebracht werden müssen. Erfindungsgemäß ist deshalb der Läufer bzw. Rotor aus einem Grundwerkstoff hergestellt, in den die Permanentmagnetelemente eingebettet sind. Im Ergebnis ist es dadurch insbesondere möglich, dass der Rotor aus relativ leichten Werkstoffen, beispielsweise Kunststoff oder Leichtmetall, hergestellt wird. Die Permanentmagnete dagegen werden lediglich so groß gewählt, dass ein ausreichend hoher Magnetfluss im Magnetkreis des Stators gewährleistet ist. Statt der Verwendung von mehreren Permanentmagnetelementen mit jeweils einer Polung, die jeweils in den Grundwerkstoff eingebettet werden, ist es auch denkbar, nur ein Permanentmagnetelement in den Grundwerkstoff einzubetten. Dieses einzelne Permanentmagnetelement ist dann derart zu magnetisieren, dass sich eine vielpolige Polung ergibt.

Besonders kostengünstig und leicht kann der Rotor bzw. der Hauptbestandteil des Rotors hergestellt werden, wenn dazu ein Gussverfahren, insbesondere Kunststoffspritzguss oder Leichtmetalldruckguss, eingesetzt wird. Derartige Verfahren erlauben es insbesondere auch in einfacher Weise, die Permanentmagnetelemente in den Gusskörper einzugießen bzw. mit dem Grundwerkstoff zu umspritzen.

Eine weitere Verringerung der Masse des Rotors wird erreicht, wenn die verschiedenen Hauptbestandteile des Rotors, nämlich der die Permanentmagnetelemente tragende Wandungsabschnitt, die die Schwenkachse umgreifende Lagerhülse und ein zur Übertragung der Antriebskräfte vorgesehenes Koppelelement, jeweils durch Verbindungsrippen verbunden sind. Durch diese gerippte Struktur kann die sonst übliche Gestaltung als Vollkörper, die mit einem relativ hohen Eigengewicht des Rotors verbunden ist, vermieden werden.

Eine weitere Gewichtsreduktion ist möglich, wenn an den die Permanentmagnetelemente tragenden Wandungsabschnitten Verstärkungsrippen vorgesehen werden. Der tragende Querschnitt des Wandungsabschnitts selbst kann durch die Verstärkungsrippen entsprechend reduziert werden, so dass insgesamt eine Gewichtsreduktion erreicht wird.

In welcher Weise die Permanentmagnetelemente am entsprechenden Wandungsabschnitt des Rotors befestigt sind, ist grundsätzlich beliebig. Nach einer bevorzugten Ausführungsform sind dazu am Außenumfang des Wandungsabschnitts Vertiefungen vorgesehen, in denen die Permanentmagnetelemente aufgenommen werden. Die Außenseite der Permanentmagnetelemente geht dabei vorzugsweise kontinuierlich in die Außenfläche des Wandungsabschnitts über. Zur Fixierung der Permanentmagnetelemente können diese in die Vertiefung eingeklebt, umspritzt oder eingegossen werden. Die Vertiefungen selbst weisen vorzugsweise einen sich zum Außenumfang des Wandungsabschnitts des Rotors hin öffnenden, keilförmigen Querschnitt auf.

Der Rotor bzw. Läufer des Segmentmotors wird im Betrieb relativ zum Magnetkreis des Stators bewegt, wobei zur Erreichung eines möglichst hohen Wirkungsgrades ein möglichst kleiner Luftspalt zwischen dem Rotor und dem Stator angestrebt wird. Um Beschädigungen am Rotor bzw. am Stator durch Partikel zu vermeiden, die sich von den Permanentmagnetelementen gelöst haben können, ist es besonders vorteilhaft, wenn die Permanentmagnetelemente am Außenumfang und/oder am Innenumfang des Wandungsabschnitts durch ein Abdeckelement überdeckt werden. Das Abdeckelement kann dabei vom Grundwerkstoff des Rotors gebildet sein, wenn die Permanentmagnetelemente beispielsweise vollständig bzw. zumindest bereichsweise in den Grundwerkstoff des Rotors eingegossen sind. Alternativ bzw. additiv dazu kann das Abdeckelement auch von einer Abdeckfolie gebildet werden, durch die beispielsweise eine offene Seite des Permanentmagnetelements nach außen hin abgedeckt wird.

Zur Bildung des Magnetkreises am Stator sind verschiedene Ausführungsformen denkbar. Nach einer ersten Alternative sind im Stator ein feststehendes Außenjoch und ein feststehendes Innenjoch vorgesehen. Außenjoch und Innenjoch sind dabei derart relativ zueinander positioniert, dass sich ein geeigneter Magnetkreis bildet. Der Rotor des Segmentmotors wird mit seinem die Permanentmagnetelemente tragenden Wandungsabschnitt zwischen dem Außenjoch und dem Innenjoch durchgeführt, so dass sich die Permanentmagnetelemente bei Erregung des Magnetkreises relativ zum Stator ausrichten und dadurch die Wirkbewegung des Rotors verursachen.

Zur Herstellung des Magnetkreises sollten vorzugsweise Bauteile eingesetzt werden, die aus Lamellenblechpaketen aus Weicheisen oder sogenanntem Dynamoblech hergestellt sind.

Zur Erregung des Magnetkreises reicht grundsätzlich bereits eine Erregerspule aus. Nach einer bevorzugten Ausführungsform der Erfindung sind jedoch an jedem Magnetkreis zumindest zwei unabhängig voneinander betreibbare Erregerspulen vorhanden. Durch diese Doppelung der Erregerspulen wird weniger Streufluss verursacht und/oder eine Funktionsredundanz erreicht, so dass insbesondere bei Einsatz des Segmentmotors zum Antrieb von Ventilen in einem Verbrennungsmotor erreicht wird, dass selbst bei Ausfall einer Erregerspule das Ventil noch in eine ungefährdete Ruhestellung zurückgezogen werden kann.

Eine weitere Erhöhung der Betriebssicherheit durch Redundanz bzw. eine Erhöhung der aufbringbaren Wirkkräfte wird erreicht, wenn der Segmentmotor zwei oder mehr synchron oder unabhängig voneinander betreibbare Magnetkreise aufweist, denen jeweils eigene Gruppen von Permanentmagnetelementen am Rotor zugeordnet sind.

Durch die vorgeschlagenen Merkmale des Segmentmotors wird eine sehr hohe Dynamik, d.h. kleine Hubzeiten auch unter Einwirkung starker Gegenkräfte, erreicht. Außerdem wird der Bauraum gut genutzt und Gewicht sowie Kosten eingespart, wobei der Segmentmotor zugleich eine hohe Kraftentfaltung bei sehr gutem Wirkungsgrad ermöglicht.

Nachfolgend wird die Erfindung anhand verschiedener schematisch dargestellter Ausführungsformen für einen Schwenksegmentmotor beispielhaft erläutert.

Es zeigen:
- Fig. 1: eine erste Ausführungsform eines Segmentmotors im schematisch dargestellten Querschnitt;
- Fig. 1a: eine ergänzende Darstellung zur Ausführungsform gem. Figur 1;
- Fig. 2: den Rotor des Segmentmotors gemäß Fig. 1 in perspektivischer Ansicht;
- Fig. 3: einen Teilquerschnitt durch den Rotor gemäß Fig. 2 entlang der Schnittlinie I-I;
- Fig. 4: den Rotor gemäß Fig. 2 in teilweiser Draufsicht;
- Fig. 5: eine weitere Ausführungsform eines Rotors in teilweiser Draufsicht;
- Fig. 6: den Segmentmotor gemäß Fig. 1 im Längsschnitt;
- Fig. 6a: eine weitere Ausführungsform des Segmentmotor im Längsschnitt;
- Fig. 6b: eine weitere Ausführungsform des Segmentmotor im Längsschnitt;
- Fig. 6c: Lagerung des Koppelglieds;
- Fig. 7: das Wirkprinzip der Magnetkreise des Segmentmotors gemäß Fig. 1 in der ersten Endlage;
- Fig. 8: das Wirkprinzip der Magnetkreise des Segmentmotors gemäß Fig. 1 in der zweiten Endlage;
- Fig. 9: das Wirkprinzip der Magnetkreise eines modifizierten Segmentmotors;
- Fig. 9a: Kraftentfaltung des Segmentmotors gemäß Fig. 9;
- Fig. 10: eine zweite Ausführungsform eines Segmentmotors im Querschnitt;
- Fig. 11: eine dritte Ausführungsform eines Segmentmotors im Querschnitt;
- Fig. 12: eine vierte Ausführungsform eines Segmentmotors im Querschnitt;
- Fig. 13: einen Ventilantrieb eines Verbrennungsmotors mit zwei nebeneinander angeordneten Segmentmotoren im Querschnitt;
- Fig. 14: einen Ventilantrieb eines Verbrennungsmotors mit zwei übereinander angeordneten Segmentmotoren im Querschnitt;
- Fig. 15: einen Ventilantrieb gemäß Fig. 14 in perspektivischer Ansicht von außen;
- Fig. 16: einen Ventilantrieb eines Verbrennungsmotors mit zwei nebeneinander angeordneten Segmentmotoren;
- Fig. 17: die elektrische Ansteuerung der Erregerspulen in den Segmentmotoren des Ventilantriebs gemäß Fig. 16;
- Fig. 18: eine erste Ausführungsform der Schaltung der Erregerspulen in den Segmentmotoren des Ventilantriebs gemäß Fig. 16;
- Fig. 19: eine zweite Ausführungsform der Schaltung der Erregerspulen in den Segmentmotoren des Ventilantriebs gemäß Fig. 16;
- Fig. 20: ein Schaltbild zur Ansteuerung der Erregerspulen der Segmentmotoren in einem Ventilantrieb;
- Fig. 21: einen Ventilantrieb eines Verbrennungsmotors mit vier Segmentmotoren;
- Fig. 22: ein durch einen Segmentmotor angetriebenes Ventil;
- Fig. 23a-d: unterschiedliche Magnetanordnungen;
- Fig. 24: Detaildarstellungen für verschiedene Magnetfixierungen und Einbettungen;
- Fig. 25: alternativer Segmentmotor als Aktuator

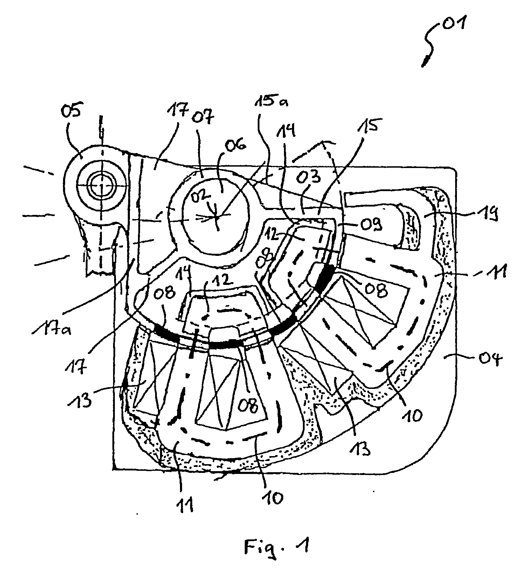

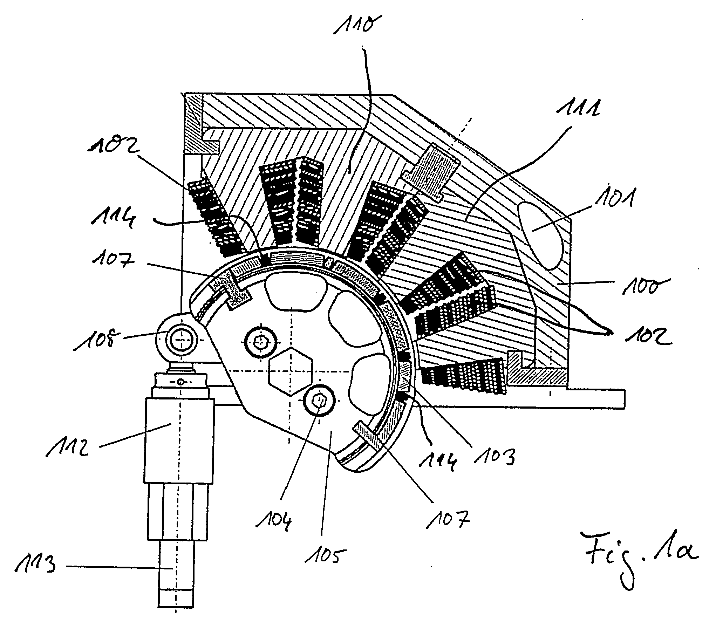

In Fig. 1 ist ein Segmentmotor 01 im Querschnitt dargestellt. Der Segmentmotor besteht im Wesentlichen aus einem um eine Schwenkachse 02 schwenkbar gelagerten Rotor 03 und einem feststehenden Stator, der aus einem Innenjoch 11 und einem Außenjoch 12 gebildet wird. In **Fig. 1** ist der Rotor 03 in seiner im Uhrzeigersinn orientierten ersten Endlage dargestellt. Die entgegen dem Uhrzeigersinn orientierte Endlage des Rotors 03 ist strichliniert angedeutet.

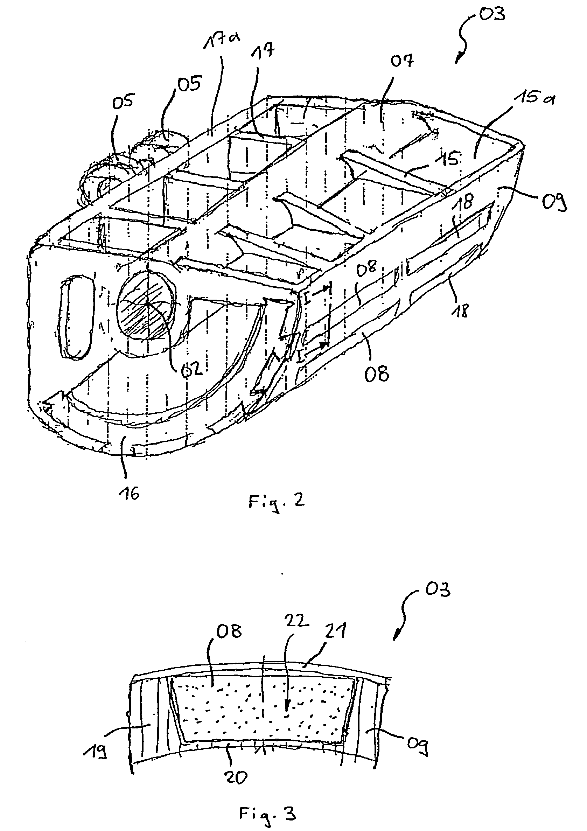

Durch die Schwenkbewegung des Rotors 03 kann ein anderes Funktionselement, beispielsweise ein Ventil in einem Verbrennungsmotor, axial und/oder rotatorisch angetrieben werden. Zur mechanischen Ankopplung des entsprechenden Funktionselements ist am Rotor 03 ein Koppelelement 05 vorgesehen. Das Koppelelement 05 stützt sich auf einem plattenförmigen und biegesteifen Wandungsabschnitt 17a ab, der über Verstärkungsrippen 17 (siehe Fig. 2) mit der Lagerhülse 07 verbunden ist, so dass die am Koppelelement 05 eingeleitete Last großflächig verteilt wird. Der Wandungsabschnitt 17a erstreckt sich senkrecht zu den Verstärkungsrippen 17. Insgesamt ergibt sich ein außerordentlich leichter und zugleich sehr steifer Rotor 03.

Zur Lagerung des Rotors 03 auf einer Achse 06 ist eine Lagerhülse 07 am Rotor 03 vorgesehen. Die Lagerhülse 07 kann entweder direkt auf der Lagerachse 06 gleiten oder es können zur Lagerung zwischen Lagerhülse 07 und Lagerachse 06 spezielle Lagerbuchsen oder Wälzlager vorgesehen sein.

Weiter sind am Rotor 03 vier Permanentmagnetelemente 08 befestigt. Alternativ zur Verwendung von vier Permanentmagnetelementen 08 ist auch eine Anzahl von fünf in Bewegungsrichtung des Rotors hintereinander angeordneten Permanentmagnetelementen 08 denkbar. Diese vier Permanentmagnetelemente 08 sind auf einem kreissegmentförmigen Wandungsabschnitt 09 derart angeordnet, dass die Permanentmagnetelemente 08 auf einer Kreisbahn um die Schwenkachse 02 rotieren.

Die am Rotor 03 befestigten Permanentmagnetelemente 08 wirken bei Funktion des Segmentmotors 01 mit zwei in Fig. 1 strichpunktiert angedeuteten Magnetkreisen 10 zusammen. Die Magnetkreise 10 werden jeweils von einem Außenjoch 11 und einem Innenjoch 12 gebildet. Die beiden Außenjoche 11 können jeweils durch eine Erregerspule 13 magnetisiert werden, so dass sich ein ausreichender magnetischer Fluss in den Magnetkreisen 10 einstellt.

Die Außenjoche 11 und die Spulen 13 sind mit einem Gießharz und, soweit erforderlich, mit Füllstücken gut wärmeleitend in ein Gehäuse 04 eingebettet. Zur feststehenden Befestigung der Innenjoche 12 am Gehäuse 04 sind Schalen 14 vorgesehen, die sich parallel zur Schwenkachse 02 durch den auf der Innenseite des Wandungsabschnittes 09 gebildeten Hohlraum durch den Rotor 03 erstrecken. Im Ergebnis wird dadurch erreicht, dass der die Permanentmagnetelemente 08 tragende Wandungsabschnitt 09 des Rotors 03 mit sehr kleinem Luftspalt zwischen den feststehenden Außenjochen 11 und den feststehenden Innenjochen 12 hindurch bewegt werden kann. Durch die beiden Magnetkreise 10, die beide jeweils einem gemeinsamen Wandungsabschnitt 09 des Rotors 03 zugeordnet sind, wird eine hohe Wirkkraftausbeute am Segmentmotor 01 erreicht.

Die Fig. 1 a zeigt eine weitere Darstellung des Rotors gem. Fig. 1. Die vorzugsweise mehrteiligen Joche 110, 111 sind im Gehäuse 100 durch entsprechende Ausbildungen eingebettet, damit sowohl die Tangential- als auch die Radialkräfte aufgenommen werden. Ebenfalls im Jochschenkel und Gehäuse eingebettet sind mehrlagige Form- oder Schichtspulen 102, um den Füllfaktor zu verbessern. Um eine gute Wärmeabfuhr zu gewährleisten, weist das Gehäuse 100 Kühlkanäle 101 auf. Die Formspulen 102 bestehen aus mehreren Lagen und können auf den verschiedenen Seiten des Joches unterschiedliche Querschnitte d.h. Breiten aufweisen. Die Lagen sind auf einer Stirnseite mit der jeweils anderen Lage verschweißt. Der Rotor weist Scheiben 105,106 auf, welche am Umfang die Permanentmagnete 103 tragen. Die Permanentmagnete 103 stützen sich dabei mit ihren beiden Enden auf biegesteife Formstücke 107 ab, die auf den Scheiben anliegen. Die Formstücke 107 übertragen dabei einen Teil oder die gesamte Magnetkraft. Die Scheiben können - wie dargestellt - mittels Schrauben 104 mit einem Hebel 108 verbunden sein, der die Lagerung für ein Kopplungsglied 112 für einen Stellantrieb 113, z.B. ein Ventil, bildet. Die Joche weisen konische Pole auf. Zudem sind zwischen den Permanentmagneten 103 Stege 114 aus einem Material angeordnet, welches die Längenänderung der Permanentmagnete 103 kompensiert.

In **Fig. 2** ist der konstruktive Aufbau des Rotors 03 im Detail dargestellt. Man erkennt das Koppelelement 05, die Lagerhülse 07 und den kreissegmentförmigen, die Permanentmagnetelemente 08 tragenden Wandungsabschnitt 09. Der Rotor 03 ist in der Art eines Gusskörpers ausgebildet und kann beispielsweise aus Kunststoff oder Leichtmetall, insbesondere Aluminium hergestellt werden. In den Grundwerkstoff des Rotors 03, d.h. beispielsweise in den Kunststoff oder in das Leichtmetall, sind die Permanentmagnetelemente 08 eingebettet. Die Permanentmagnetelemente 08 können dazu beispielsweise in eine Spritzgussform eingebracht und mit dem entsprechend geeigneten Kunststoff umspritzt werden. Alternativ dazu können die Permanentmagnetelemente 08 zunächst mittels einer Justagevorrichtung eingelegt und anschließend verklebt oder vergossen werden.

Um einen möglichst leichten Rotor 03 herstellen zu können, ist dieser nicht in der Art eines Vollkörpers ausgebildet. Vielmehr wird die Lagerhülse 07 durch sich radial nach außen erstreckende Verbindungsrippen 15 mit dem Wandungsabschnitt 09 verbunden. Die hinterste Verbindungsrippe 15a ist als vollflächige Wandung ausgebildet, um den Rotor 03 weiter auszusteifen.

Zur Aussteifung des Wandungsabschnitts 09 sind außerdem beidseitig an den Stirnseiten Verstärkungsrippen 16 vorgesehen. Aus spritztechnischen Gründen ist es teilweise vorteilhaft, wenn diese Verstärkungsrippen nicht einstückig an den Wandungsabschnitt 09 angeformt sind. In diesen Fällen werden die Verstärkungsrippen als separate Bauteile gefertigt und nachträglich am Rotor 03 befestigt. Dies kann insbesondere durch Ankleben oder Verschweißen der Verstärkungsrippen 16 erfolgen. Auch das Koppelelement 05 ist mittels Verbindungselementen 17 und 17a in den Körper des Rotors 03 integriert.

Wie aus **Fig. 2** weiter ersichtlich ist, sind in Richtung der Schwenkachse 02 hinter den vier Permanentmagnetelementen 08 weitere vier Permanentmagnetelemente 18 am Rotor 03 befestigt, die jeweils mit den zugeordneten Permanentmagnetelementen 08 fluchten. Auf diese Weise kann ein letztendlich beliebig langer Rotor 03 unter Einsatz von standardisierten Permanentmagnetelementen hergestellt werden. Auch in Richtung der Schwenkbewegung ist zwischen den einzelnen Permanentmagnetelementen 08 bzw. 18 jeweils ein bestimmter Abstand vorhanden.

In **Fig. 3** ist die Befestigung der Permanentmagnetelemente 08 am Rotor 03 im Querschnitt entlang der Schnittlinie I-I schematisch dargestellt. Im Grundwerkstoff 19, beispielsweise einem geeigneten hochfesten Kunststoff, aus dem das Kupplungselement 05, die Lagerhülse 07, der Wandungsabschnitt 09, die Verbindungsrippen 15 und die Verbindungsrippen 17 und der Wandungsabschnitt 17a bestehen, sind im Querschnitt keilförmige und sich nach außen öffnende Vertiefungen eingeformt, in die die Permanentmagnetelemente 08 eingelegt, eingegossen und eingeklebt werden. Auf der Innenseite des Wandungsabschnitts 09 wird das Permanentmagnetelement 08 durch ein vom Grundwerkstoff 19 gebildetes Abdeckelement 20 vollständig oder auch nur teilweise überdeckt, so dass keine sich von den Permanentmagnetelementen 08 bzw. 18 lösenden Partikel in den Luftspalt zwischen Rotor 03 und Innenjoch 12 gelangen. Außerdem wird durch das Abdeckelement eine erhebliche Erhöhung der Bauteilsteifigkeit erreicht. Am Außenumfang des Wandungsabschnitts 09 werden die Permanentmagnetelemente 08 bzw. 18 durch eine Abdeckfolie 21 überdeckt, so dass auch die Beschädigung des Luftspalts zwischen dem Rotor 03 und dem Außenjoch 11 durch abgelöste Partikel ausgeschlossen ist.

Alternativ zu der dargestellten Ausführungsform ist es auch denkbar, dass die Permanentmagnetelemente 08 auf der Innenseite des Wandungsabschnitts 09 angeordnet sind, beziehungsweise in eine Keilform eingeführt werden, die sich in Richtung des Außenumfangs verjüngt. Auf diese Weise lassen sich die auf die Permanentmagnetelemente 08 wirkenden Zentrifugalkräfte sehr gut abfangen. Konstruktiv könnten die Permanentmagnetelemente 08 dazu beispielsweise an einem separaten Einlegeteil befestigt werden, das seinerseits an der Innenseite des Wandungsabschnitts 09 fixiert wird.

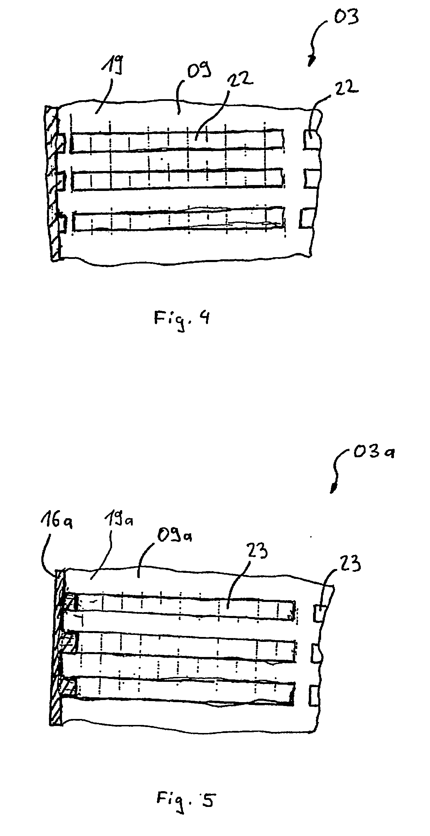

**Fig. 4** zeigt den aus Kunststoff hergestellten Rotor 03 mit Vertiefungen 22, in die die Permanentmagnetelemente 08 bzw. 18 eingeklebt werden. Man erkennt, dass die Vertiefungen 22 zur Stirnseite des Rotors 03 hin, an der die Versteifungsrippe 16 befestigt ist, einen geschlossenen Endquerschnitt aufweisen, so dass die Permanentmagnetelemente 08 bzw. 18 auf fünf Seiten vom Grundwerkstoff 19, d.h. von Kunststoff, umschlossen sind.

**Fig. 5** zeigt eine Ausführungsform 03a eines Rotors, der aus einem Grundwerkstoff 19a, nämlich aus Aluminium, gefertigt ist. Zur Vermeidung von Wirbelströmen sind die Vertiefungen 23 zur Aufnahme der Permanentmagnetelemente 08 bzw. 18 zu den Stirnseiten des Rotors 03a hin offen und werden durch eine entsprechend ausgebildete Verstärkungsrippe 16a, die aus einem elektrisch nicht leitenden Material hergestellt ist, verschlossen.

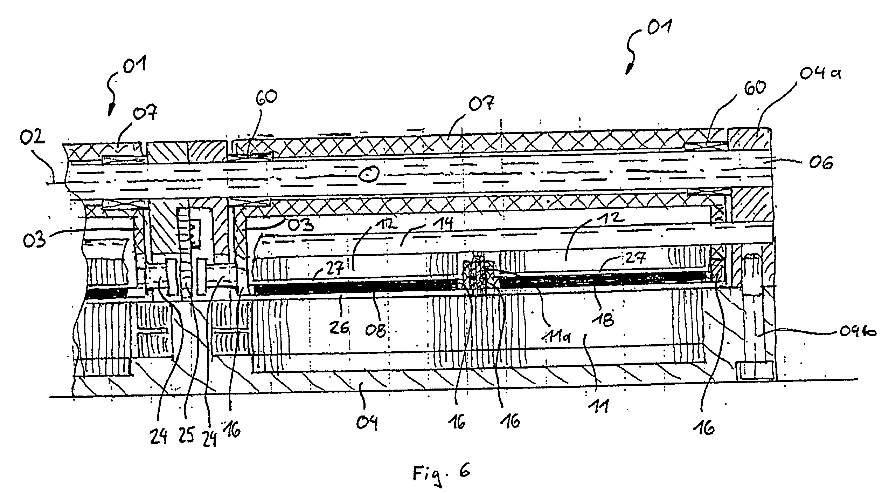

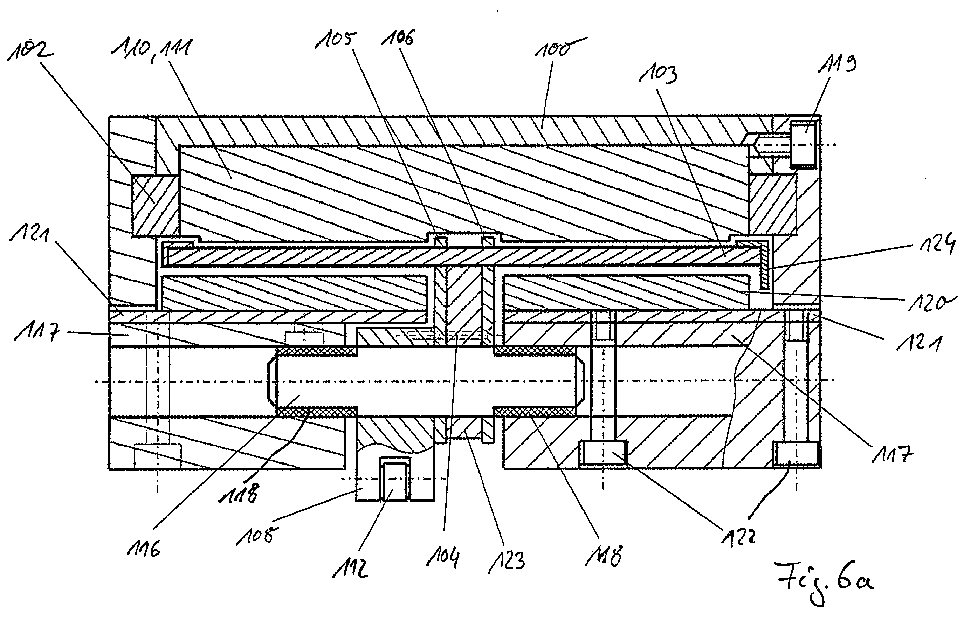

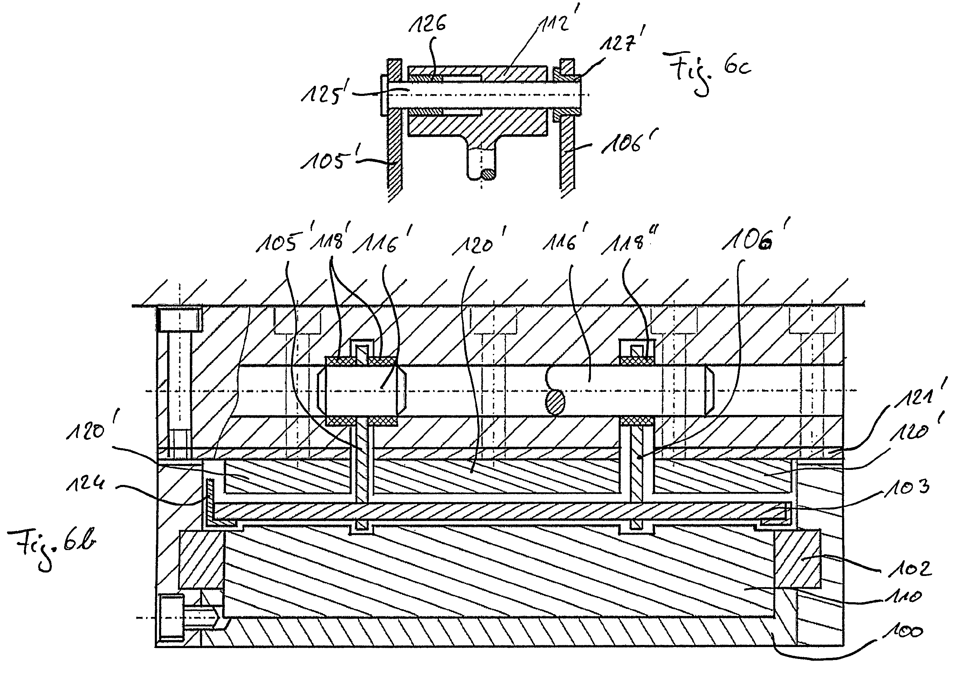

**Fig. 6** zeigt zwei hintereinander angeordnete Segmentmotoren 01 im Längsschnitt. Die Lagerhülsen 07 der Rotoren 03 sind jeweils auf einer gemeinsamen Lagerachse 06 schwenkbar gelagert, so dass die Rotoren 03 parallel zueinander um die Schwenkachse 02 verschwenkt werden können. Der Rotor ist mit Lagerbuchsen 60 gelagert, die an einen Schmierkreislauf angeschlossen sein können. Die Stirnseite des Gehäuses 04 wird von einer Lagerplatte 04a gebildet, die mittels Befestigungsschrauben 04b befestigt wird. In der Lagerplatte 04a sind Aussparungen zur Befestigung der Lagerachse 06 und der Schale 14 vorgesehen.

An der Unterseite der Rotoren 03 erkennt man die Permanentmagnetelemente 08 und 18 sowie die Verstärkungsrippen 16. Zueinander weisend sind an den Rotoren 03 jeweils Geberelemente 24 befestigt, die mit einem Sensor 25 zur Positionserfassung der Rotoren 03 zusammenwirken. Das Außenjoch 11 ist in das Gehäuse 04 eingegossen. Das Innenjoch 12 ist in der Mitte abgesetzt und wird mittels der Schale 14 feststehend in Lagerplatten gehalten, die durch Schrauben mit dem Gehäuse 04 bzw. dem Außenjoch 11 verbunden sind. In der Mitte wird das Innenjoch 12 durch eine oder mehrere überstehende Lamellen 11a des Außenjochs 11, die eine Ausnehmung im Wandungsabschnitt 09 durchgreifen, abgestützt, wodurch die zwischen Außenjoch 11 und Innenjoch 12 auftretenden magnetischen Anziehungskräfte gleichmäßiger radial und tangential abgefangen werden. Im Ergebnis ergibt sich somit ein Luftspalt 26 zwischen Rotor 03 und Außenjoch 11 einerseits und ein Luftspalt 27 zwischen Rotor 03 und Innenjoch 12 andererseits.

Die **Fig. 6a** zeigt einen Schnitt durch einen Aktutor mit einem alternativen Rotoraufbau gem. **Fig. 1a****.** Im Gehäuse 100 sind Joche 110, 111 mit Spule 102 eingebettet. Die Scheiben 105, 106, welche die Permanentmagnete 103 fixieren und halten, sind auf einer Welle 116 mit verdrehfestem Profil, z.B. Sechskant, angeordnet. Die Welle 116 ist mittels Lagerbuchsen 118 drehbar in den beiden Lagerblöcken 117 gelagert, die mit dem Gehäuse über Befestigungsmittel 119, z.B. in Form von Schrauben, verbunden sind. Auf den Lagerblöcken 117 ist der Innenstator 121 mit den Jochblechen 120 mittels Schrauben 122 biegesteif und verdrehsicher befestigt. Auf der Welle 116 ist der Hebel 108 und daran befestigtem Koppelglied 112 mit den Scheiben 105, 106 über Schrauben 104 verbunden. Die Scheiben 105, 106 sind durch ein Zwischenstück 123 voneinander beabstandet. Die Permanentmagnete 103 tragen an beiden Stirnseiten eine Außenverstärkung 124, die vorzugsweise L-förmig gestaltet ist.

Die **Fig. 6b** zeigt eine weitere Rotorgestaltung. Nachfolgend wird nur auf die Unterschiede zu dem Rotor gem. **Fig. 6a** eingegangen. Im Unterschied zum Rotor gem. **Fig. 6a** haben die beiden Mitnehmerscheiben 105', 106' einen größeren Abstand zueinander, wodurch sich Vorteile bzgl. der Biegebelastung ergeben. Diese Rotorgestaltung lässt sich überall dort einsetzen, wo der Kraftangriffspunkt ungefähr in der Mitte der Scheiben 105', 106' liegt. Die Scheiben 105', 106' können unterschiedlich gelagert sein. Auf der linken Seite der Fig. 6b ist die Scheibe 105' auf eine Lagerwelle 116' aufgepreßt, die in zwei Lagerbuchsen 118' gelagert ist. Durch diese Ausgestaltung läßt sich ein kleiner Durchmesser einsetzen, wodurch sich eine geringere Reibung ergibt. Auf der rechten Seite der Fig. 6b ist beispielhaft die Scheibe 106' mittels einer Lagerbuchse 118" auf der feststehenden Welle 116' gelagert. Die Lagerbuchse 118" liegt hierzu in einer Öffnung der Scheibe 106' ein und umfaßt die Welle 116'. Durch die Breite der Lagerbuchse 118" vergrößert sich der Abstand der beiden Innenjochteile, wodurch größere magnetische Verluste entstehen, als bei der Lagerung mit zwei Lagerbuchsen 118', wie es auf der linken Seite der Fig. 6b dargestellt ist. Unabhängig von der Lagerung der beiden Scheiben 105', 106' ist der Innenstator 120', 121' dreiteilig ausgebildet. Die Lagerbuchsen 118' sind in einer durchgehenden Bohrung eingepreßt und fixiert.

Die Fig. 6c zeigt die Lagerung des Koppelgliedes 112'. Die durchgehende Lagerwelle 125' ist in zwei Lagerbuchsen 126', 127' gelagert, wobei die Lagerbuchsen 126', 127' entweder in dem Koppelglied 112' (linke Seite der Fig. 6c) angeordnet oder zwischen den Scheiben 105', 106' und der Lagerwelle 112' angeordnet sein können (rechte Seite der Fig. 6c).

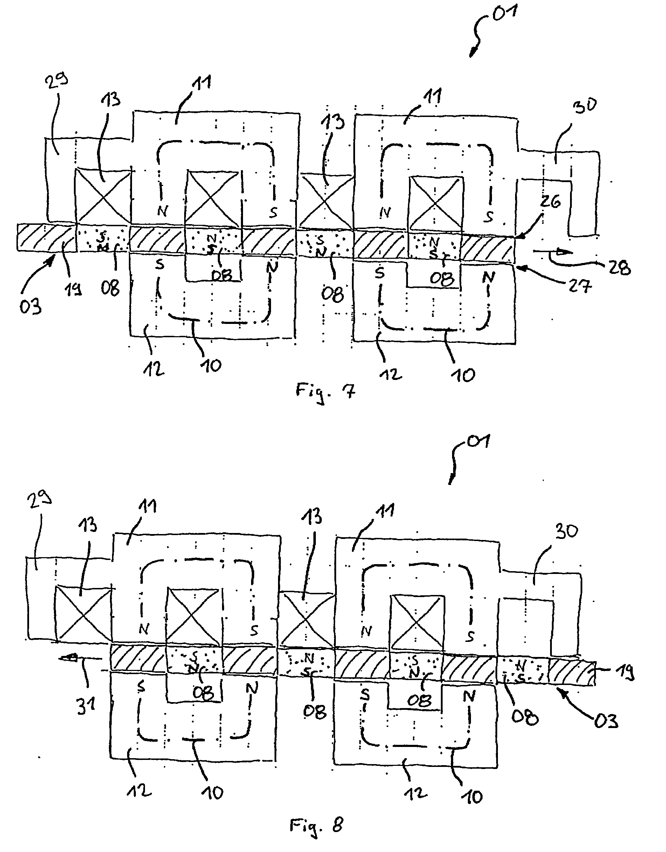

In **Fig. 7, Fig. 8** und **Fig. 9** wird die Wirkungsweise der Magnetkreise 10 im Zusammenwirken mit den Permanentmagnetelementen 08 zur Bewirkung der gewünschten Wirkbewegung des Segmentmotors 01 näher erläutert. Dabei sind in **Fig. 7, Fig. 8** und **Fig. 9** lediglich die Teile des Segmentmotors 01 dargestellt, die zum unmittelbaren Verständnis der Wirkungsweise erforderlich sind. Außerdem entspricht die Darstellung in **Fig. 7, Fig. 8** und **Fig. 9** einer ebenen Abwicklung der an sich kreisringförmigen Bewegungsbahn, um die Darstellung entsprechend zu vereinfachen.

In **Fig. 7** befindet sich der Rotor 03 mit den darin eingebetteten Permanentmagnetelementen 08 in der in Uhrzeigerrichtung orientierten Endlage und entspricht damit der Position, die auch in **Fig. 1** dargestellt ist. Die Permanentmagnetelemente 08 sind senkrecht zur Bewegungsrichtung 28 des Rotors 03, die der Bewegung auf einem Kreisbogen um die Schwenkachse 02 entspricht, magnetisiert, wobei die in Bewegungsrichtung 28 zueinander benachbarten Permanentmagnetelemente 08 jeweils mit wechselnder Polung in dem Rotor 03 befestigt sind. Bei Ansteuerung der Spulen 13 werden die Lamellenblechpakete des Außenjochs 11 und des Innenjochs 12 derart magnetisiert, dass sich die strichpunktierten Magnetkreise 10 bilden. In den Luftspalten 26 und 27 zum Rotor 03 hin sind die Magnetkreise 10 unterbrochen, so dass sich magnetische Nord- bzw. Südpole bilden.

Befindet sich der Rotor 03 in der in **Fig. 7** dargestellten Endlage und werden die Magnetkreise 10 durch Erregung der Spulen 13 mit dargestellter Polung aufgebaut, so wirken auf die Permanentmagnetelemente 08 magnetische Kräfte, die den Rotor 03 in Bewegungsrichtung 28 antreiben. Sobald die Permanentmagnetelemente 08 genau fluchtend zwischen den Polen der Außenjoche 11 und Innenjoche 12 stehen, wird die magnetische Kraft zu Null und wechselt nach dem Durchgang durch diese Mittellage bei gleicher Stromrichtung durch die Erregerspule das Vorzeichen, so dass der Rotor 03 nach Durchgang durch die Mittellage wiederum abgebremst wird.

An die Außenjoche 11 sind Nebenjoche 29 und 30 angeformt, die ebenfalls durch Erregung mit den Spulen 13 magnetisiert werden können. Sobald der Rotor 03 seine entgegen der Uhrzeigerrichtung orientierte Endlage (entspricht der in **Fig. 8** dargestellten Endlage) erreicht hat, wird das Nebenjoch 30 durch die Permanentmagnetelemente 08 derart magnetisiert, dass der Rotor 03 in dieser Endlage fixiert wird. Zum Antrieb des Rotors 03 in Gegenbewegungsrichtung 31 werden wiederum die Magnetkreise 10 aufgebaut und der Rotor 03 dadurch in Gegenbewegungsrichtung angetrieben. In der ersten Endlage kann der Rotor 03 ebenso durch Magnetisierung des Nebenjochs 29 fixiert werden, ohne dass ein Magnetfluß durch die Erregerspule aufgebracht wird.

Bei der in **Fig. 7** und **Fig. 8** dargestellten Ausführungsform entspricht die Breite der Permanentmagnetelemente 08 in Bewegungsrichtung 28 dem Querschnitt der zugeordneten Magnetkreise 10. Das bedeutet mit anderen Worten, die Breite der Permanentmagnetelemente 08 entspricht gerade der Polbreite des Außenjochs bzw. der Polbreite des Innenjochs. Außerdem entspricht auch der Abstand zwischen zueinander benachbarten Permanentmagnetelementen 08 in Bewegungsrichtung diesem Breitenmaß, so dass sich im Ergebnis ein äquidistantes Raster von Grundwerkstoff 19 und Permanentmagnetelementen 08 ergibt. Dadurch werden alle Pole der Permanentmagnetelemente 08 sowohl anziehend als auch abstoßend bei der Krafteinwirkung auf den Rotor 03 durch die Magnetkreise 10 genutzt. Dazu ist es weiterhin erforderlich, dass die beiden Magnetkreise 10, d.h. die Pole und entsprechende Polbreiten der benachbarten Außenjoche 11 bzw. Innenjoche 12, einen Abstand zueinander aufweisen, der gerade der Breite der Permanentmagnetelemente in Bewegungsrichtung 28 entspricht.

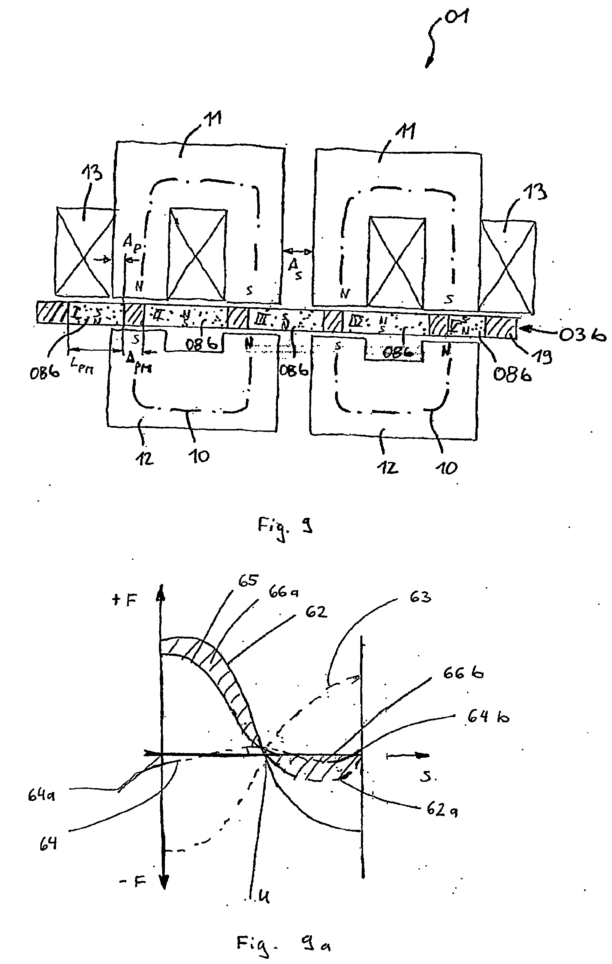

In **Fig. 9** ist eine alternative Ausführungsform 03b des Rotors dargestellt, der fünf Permanentmagnetelemente 08b aufweist. Beim Rotor 03b weisen die Permanentmagnetelemente 08b jeweils unterschiedliche Breiten L_{PM} auf, die größer oder kleiner sind als die Breite der Pole der zugeordneten Außenjoche 11 bzw. der Pole der zugeordneten Innenjoche 12. Damit ergeben sich für die verschiedenen Permanentmagnetelemente 08b unterschiedliche Eintauchtiefen A_{P} in den Jochständer. Der Abstand Δ_{PM} zwischen benachbarten Permanentmagnetelementen 08b ist erheblich kleiner (ungefähr 20%) als die Breite L_{PM} der Permanentmagnetelemente 08b.

Durch entsprechende Gestaltung der Eintauchtiefen A_{P} kann erreicht werden, dass der Rotor 03b in seinen Endlagen fixiert werden kann, ohne dass dazu entsprechende Nebenjoche erforderlich sind. Darüber hinaus ist durch die Eintauchtiefe der verschiedenen Permanentmagnetelemente 08b eine Optimierung der Anfangskraft, des Kraftverlaufs und der Lage der Kraftumkehr innerhalb des Hubes möglich. Auch der Abstand A_{S} zwischen den verschiedenen Magnetkreisen kann variiert werden, um dadurch die verschiedenen Systemparameter zu optimieren.

In **Fig. 9a** sind schematisch die Funktionen 62, 63 und 64 der Kraftentfaltung des Rotors 03b beim Durchlauf zwischen seinen beiden Endlagen für unterschiedliche Stromstärken und Stromrichtungen aufgetragen. Funktion 62 stellt den Kraftverlauf für den hohen positiven Strom durch die Erregerspule, 63 den Kraftverlauf für den entsprechend hohen negativen Strom dar. Der Kraftverlauf ist gegenüber dem Umkehrpunkt U asymmetrisch. Die Funktion 64 stellt den Kraftverlauf für den stromlosen Zustand dar. Die Funktion 65 zeigt den typischen Gaskraftverlauf am Auslassventil während der Öffnung und Hubbewegung. Zur Ventilöffnung gegen Gaskraft muss die Magnetkraft 62 größer sein als die Gaskraft, da das Ventil beschleunigt werden muss, um eine kurze Öffnungszeit zu ermöglichen. Zusätzliche Gegenkräfte (z.B. Reibung) müssen zusätzlich berücksichtigt werden. Diese sind jedoch im Lastbetrieb deutlich geringer als die Gaskraft. Nach der Hubmitte muss das Ventil wieder verzögert werden. Dies ist durch eine kleinere, die Verzögerung bewirkende Magnetkraft in entgegengesetzter Richtung möglich.

Man erkennt, das die vom Rotor 03b abgegebene Kraft beim Umkehrpunkt U einen Nulldurchgang hat und somit das Vorzeichen der abgegebenen Kraft wechselt. Die Kraftumkehr ohne Umpolung ist insbesondere beim Antrieb von Ventilen von Vorteil, da diese nach Durchlauf des Hubes zur Endlage hin wieder abgebremst werden müssen. Aufgrund der Kraftumkehr genügt hierfür eine Reduzierung des Stromes ohne Umpolung entsprechend Verlauf 62a. Die Höhe des Stromes wird durch die Closed-Loop-Regelung bestimmt. Im Hubendbereich kann es jedoch zu einer Umpolung bei kleinen Strömen kommen, um eine Feinregelung mit kleinen Aufsetzgeschwindigkeiten zu erzielen (Soft-touch). Die Hubarbeit der schraffierten Flächen 66a und 66b im positiven und negativen Kraftbereich muss gleich sein, um diesen Soft-touch zu erzielen. Insbesondere beim Betrieb gegen Gasgegenkräfte ist eine Auslegung sinnvoll, die eine Unsymmetrie des Kraftverlaufes gegenüber dem Umkehrpunkt vorsieht. Da für Einlassventile in beiden Bewegungsrichtungen vergleichbare Gegenkräfte wirken, wäre für diesen Fall eine Symmetrie des Kraftverlaufes gegenüber dem Umkehrpunkt sinnvoller.

Da für die Kraftumkehr keine Umpolung/ Stromumkehr erforderlich ist, kann zudem eine höhere Dynamik im Betrieb erzielt werden sowie der Energiebedarf reduziert werden. Die Kraft des Kraftverlaufes 64 ohne Strom in den Endlagen (64a negativ und 64b positiv) wirkt in Richtung der Endlagen. Dies wirkt sich positiv auf die Energiebilanz aus, da der stationäre Betrieb in den Endlagenstellungen keinen Strom erfordert.

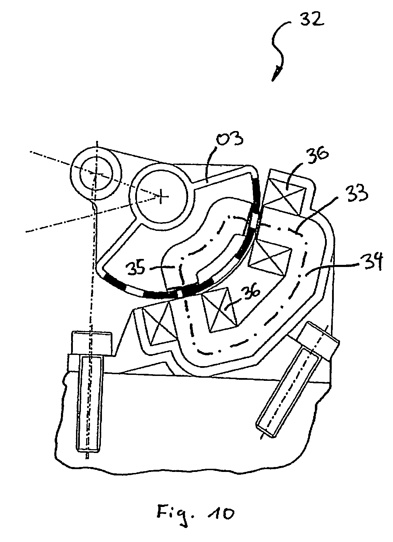

In **Fig. 10** ist eine zweite Ausführungsform 32 eines Segmentmotors im Querschnitt dargestellt. Beim Segmentmotor 32 ist lediglich ein Magnetkreis 33 zum Antrieb des Rotors 03 vorgesehen. Zum Aufbau des Magnetkreises 33 im Außenjoch 34 bzw. Innenjoch 35 sind jedoch zwei Erregerspulen 36 vorhanden, die synchron oder unabhängig voneinander betrieben werden können. Durch die Redundanz der beiden Spulen 36 ist gewährleistet, dass bei Ausfall einer der beiden Spulen der Rotor 03 noch in seine Endlage zurückgezogen werden kann, so dass insbesondere beim Einsatz des Segmentmotors 32 zum Antrieb eines Ventils in einem Verbrennungsmotor eine Kollision zwischen Kolben und Ventil verhindert wird. Mittels Schrauben ist das Gehäuse des Segmentmotors z.B. mit dem Zylinderkopf eines Verbrennungsmotors wärmeleitend verbunden.

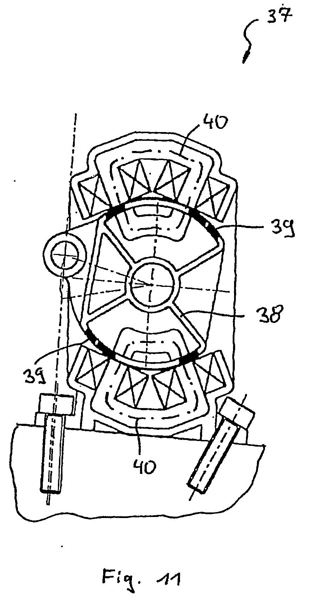

In **Fig. 11** ist eine dritte Ausführungsform 37 eines Segmentmotors dargestellt. Der Segmentmotor 37 weist einen Rotor 38 auf, der zwei getrennte, kreissegmentförmige Wandungsabschnitte 39 enthält, in denen jeweils Permanentmagnetelemente befestigt sind. Den beiden Wandungsabschnitten 39 sind jeweils Magnetkreise 40 zugeordnet. Da die Magnetkreise 40 am Segmentmotor 37 übereinander angeordnet sind, ergibt sich eine außerordentlich schmale Bauweise bei hoher Kraftentwicklung.

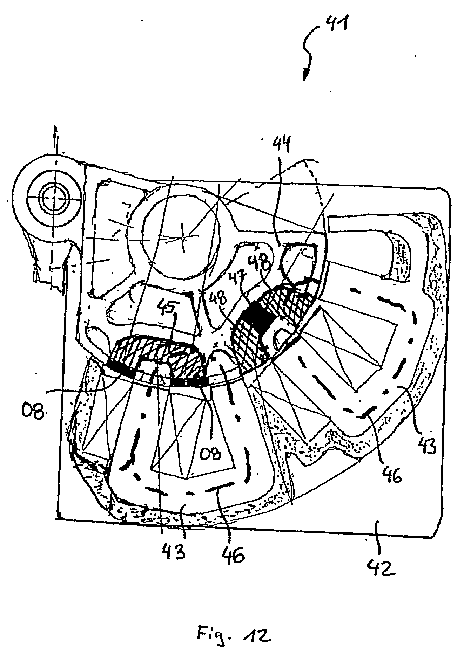

In **Fig. 12** ist eine vierte Ausführungsform 41 eines Segmentmotors im Querschnitt dargestellt. Der Aufbau des Stators 42 mit den Außenjochen 43 entspricht im Wesentlichen dem Aufbau des Segmentmotors 01. Der wesentliche Unterschied zwischen den Segmentmotoren 41 und 01 besteht im Aufbau des Rotors 44. Hinter den Permanentmagnetelementen 08 ist im Rotor 44 ein Magnetflusselement 45 eingebettet. Durch das Magnetflusselement 45 wird bei entsprechender Stellung des Rotors 44 der Magnetkreis 46 geschlossen.

Alternativ zur Kombination der beiden Permanentmagnetelemente 08 mit dem Magnetflusselement 45 kann auch ein einziges Permanentmagnetelement 47 eingesetzt werden, das zwischen zwei Magnetflusselementen 48 positioniert ist. Auch bei dieser Ausführungsform kann eine dem Rotor 03 entsprechende Versteifungsstruktur eingesetzt werden.

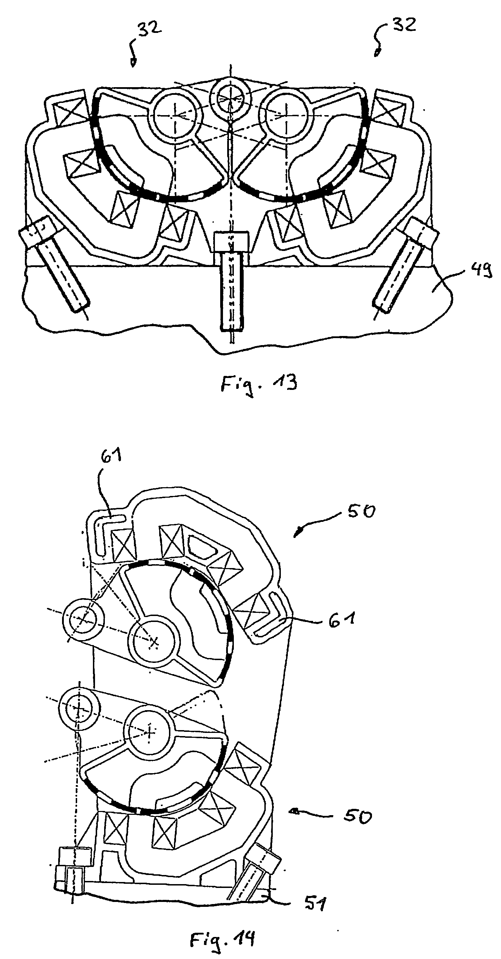

In **Fig. 13** ist eine erste Ausführungsform eines Ventilantriebs an einem Verbrennungsmotor dargestellt. Zwei Segmentmotoren 32 sind nebeneinander auf einem Zylinderkopf 49 aufgeschraubt und treiben die Einlass- bzw. Auslassventile an. Die in **Fig. 13** dargestellte Ausführungsform erlaubt den Bau von sehr flachen Motoren mit relativ breitem Zylinderkopf.

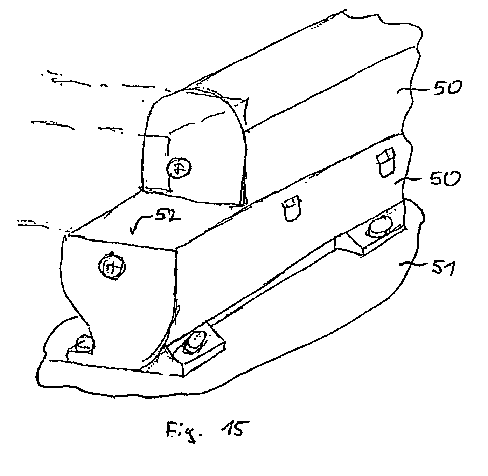

Bei dem in **Fig. 14** dargestellten Ventilantrieb sind zwei Segmentmotoren 50 übereinander auf einem Zylinderkopf 51 befestigt. Dadurch lässt sich die Einbaubreite erheblich verringern. Im oberen Segmentmotor 50 sind Kühlkanäle 61 vorgesehen, um für eine ausreichende Kühlung zu sorgen. **Fig. 15** zeigt die beiden Segmentmotoren 50 und den Zylinderkopf 51 in perspektivischer Ansicht. Die beiden Segmentmotoren 50 weisen jeweils zueinander gerichtete Kontaktflächen 52 auf, die eine einfache Montage der beiden Segmentmotoren 50 aufeinander erlauben. Der Versatz im vorderen Teil zwischen den beiden Segmentmotoren 50 wird durch den Ventilabstand im Zylinderkopf 51 verursacht und kann zur Anbringung eines Steuergerätes genutzt werden, da die wärmeleitende Kopplung mit dem gekühlten Aktuatorgehäuse eine wünschenswerte Kühlung des Steuergerätes ermöglicht.

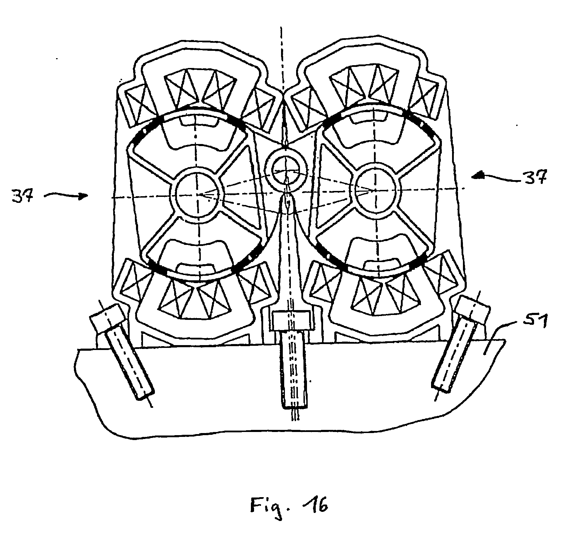

**Fig. 16** zeigt eine weitere Ausführungsform eines Ventilantriebs mit zwei nebeneinander angeordneten Segmentmotoren 37.

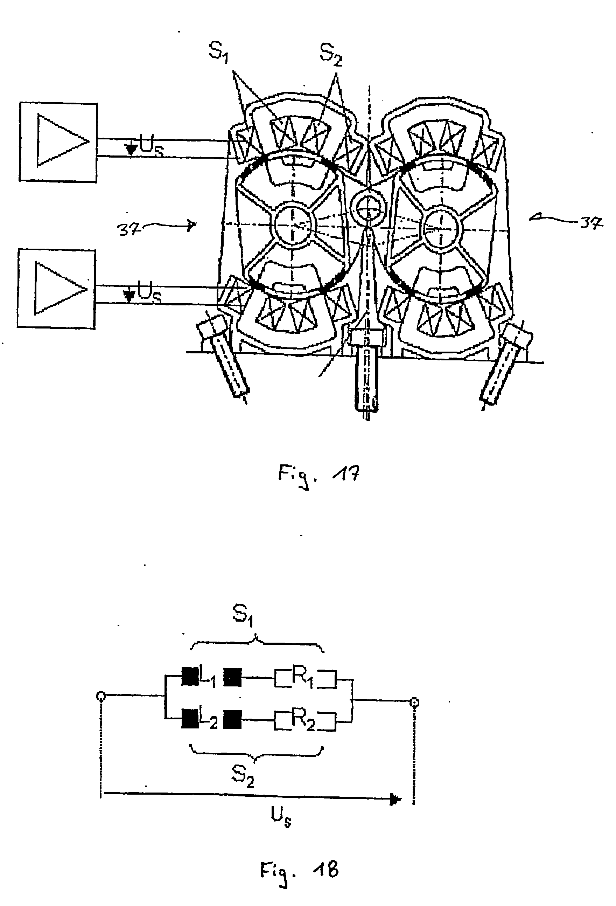

**Fig. 17** zeigt die Ansteuerung der Erregerspulen S1 und S2 in den Segmentmotoren 37.

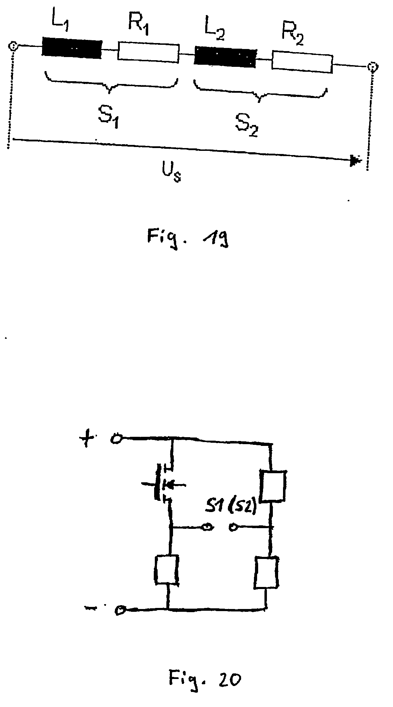

In **Fig. 18** und **Fig. 19** sind Ersatzschaltbilder der Ansteuerung der Erregerspulen S1 und S2 dargestellt, die alternativ zueinander eingesetzt werden können. Die Erregerspannung U_{S} kann gemäß **Fig. 18** entweder über die parallel zueinander geschalteten Erregerspulen S₁ und S₂ angelegt werden. Alternativ dazu kann die Erregerspannung U_{S} gemäß **Fig. 19** über die in Reihe geschalteten Erregerspulen S₁ und S₂ angelegt werden.

In **Fig. 20** ist vereinfacht eine Vollbrücke dargestellt, über die die Spulen S₁ und S₂ angesteuert werden können. Am Eingang der Vollbrücke ist die Stromversorgung angeschlossen, die vorzugsweise durch das Bordnetz eines Fahrzeugs zur Verfügung gestellt wird. In der Mitte wird die Spule S₁ bzw. S₂ angeschlossen. Als Leistungsschalter werden vorzugsweise MOS-FET eingesetzt. Im linken oberen Quadranten ist das typische Symbol gezeichnet. Die anderen Quadranten sind lediglich symbolisch dargestellt. Mit der in **Fig. 20** dargestellten Vollbrücke lässt sich jeder Schaltmodus, insbesondere Umpolung, Rückspeisung der Spulenenergie in das Netz sowie ein schnelles und langsames Abschalten des Stroms, realisieren.

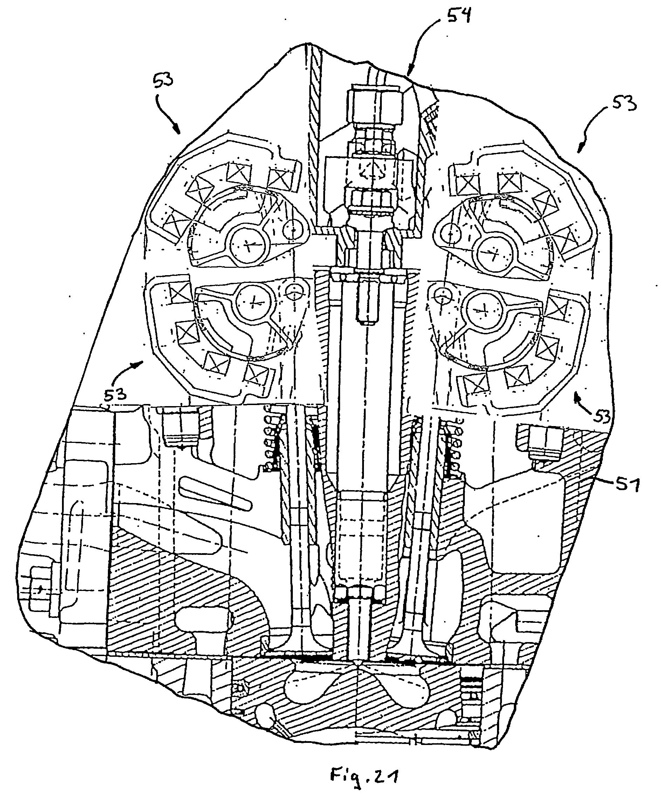

In **Fig. 21** ist eine weitere Ausführungsform eines Ventilantriebs mit vier Segmentmotoren 53 dargestellt. Im Ergebnis ist dadurch ein Verbrennungsmotor mit sehr geringen Ventilabständen sowohl in Richtung der Motorlängsachse als auch in Querrichtung dazu möglich. In der Mitte zwischen den Segmentmotoren 53 kann außerdem ein weiteres Funktionselement des Verbrennungsmotors, im vorliegenden Fall ein Einspritzventil 54, positioniert werden. Die dargestellte Konfiguration ermöglicht einen sehr schmalen Zylinderkopf mit großer Gestaltungsfreiheit für Saugrohr und Auspuff.

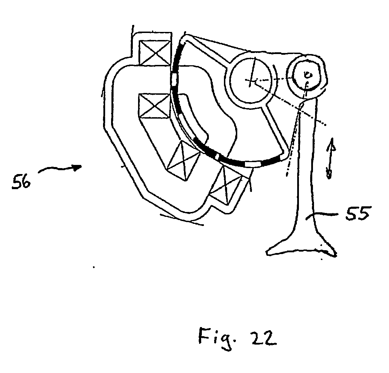

In **Fig. 22** ist ein Ventilantrieb zur Verstellung eines Ventils 55 mittels eines Segmentmotors 56 schematisch dargestellt.

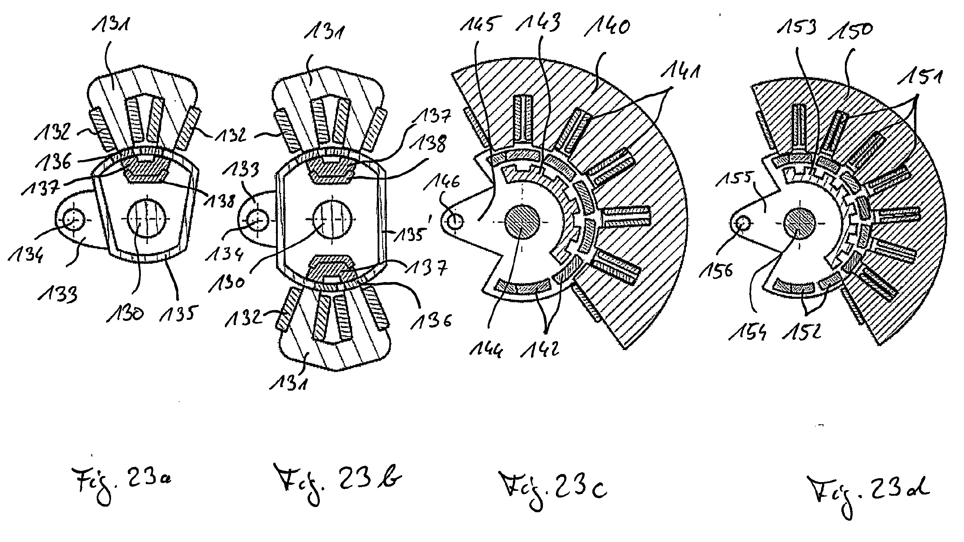

Die Fig. 23a bis 23d zeigen unterschiedliche Magnetanordnungen, die sich in der Anzahl der Jochschenkel und entsprechenden Anzahl der Permanentmagnete und Rotorausbildung unterscheiden. Durch die unterschiedlichen Ausgestaltungen lassen sich unterschiedliche Kräfte bzw. Drehmomente erzeugen.

Die Fig. 23a zeigt eine Ausführung mit einem Magnetsystem und zwei Jochschenkeln 131 und zwei Permanentmagneten 136. Der Rotor 135 ist um eine Achse 130 verschwenkbar. Am Rotor 135 ist ein Hebel 133 angeformt oder befestigt, der eine Welle 134 trägt, welche zur Befestigung eines Stellgliedes (nicht dargestellt) dient. Der Innenstator 137 weist ebenfalls zwei Pole auf, die den Polen des Außenstators 131 gegenüberliegen. In den durch die Pole von Außenstator 131 und Innenstator 137 gebildeten Luftspalten liegt der Rotor 135 mit seinen Permanentmagneten 136 ein. Nur der Außenstator 131 trägt an seinen Jochen Erregerspulen 132.

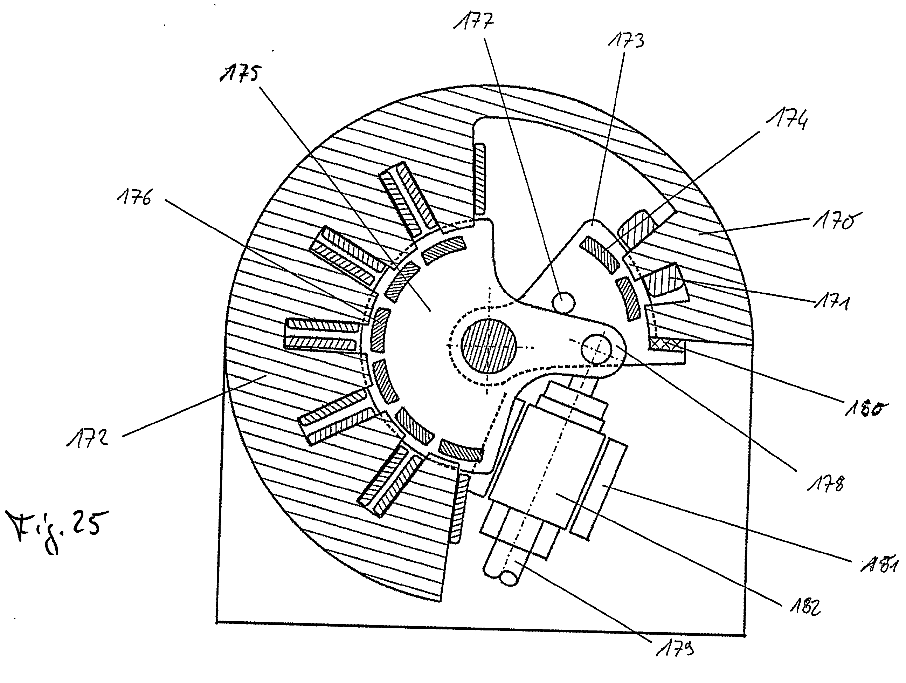

Die Fig. 23b zeigt eine Ausführungsform mit zwei Magnetsystemen, wobei jedes der beiden Magnetsysteme identisch mit dem in Fig. 25a dargestellten Magnetsystem ist. Der Rotor 135' ist hierzu entsprechend ausgebildet und trägt nunmehr vier Permanentmagnete 136, wobei jeweils zwei Permanentmagnete 136 jeweils einem Magnetsystem zugeordnet sind. Der Rotor 135' kann spiegelsymmetrisch ausgebildet sein. Es ist jedoch auch möglich, die Magnetsysteme in beliebigem Winkel zueinander anzuordnen. Auch können mehr als zwei Magnetsysteme am Rotor angreifen. Ebenso ist es möglich, das jedes Magnetsystem mehr als zwei Permanentmagnete im Rotor aufweist.

Es ist auch möglich, die Magnetsysteme zu einer Statoranordnung zusammenzufassen, wobei der Außenstator und der Innenstator jeweils nur aus einem gemeinsamen Paket von Blechen besteht. Derartige Anordnungen sind beispielhaft in den Fig. 23c und 23d dargestellt. So zeigt Fig. 23c ein Drei-Magnetsystem mit sechs Polen. Der Außenstator 140 besteht aus einem Blechpaket, welches 6 Joche bildet. Die Erregerspulen 141 können als Wickelspulen oder Formspulen ausgebildet sein. Jeweils zwei benachbarte Joche bilden zusammen mit den gegenüberliegenden Polen des Innenstator 143 ein Magnetsystem. Der Rotor ist um die Achse 144 drehbar gelagert und hat einen Hebelarm 145, in dem eine Welle 146 zum Antrieb eines Stellgliedes drehbar gelagert ist. Die Fig. 23d zeigt ein Vier-Magnetsystem mit acht Polen. Die in den Figuren 23c und 23d dargestellten Ausführungsformen eignen sich besonders dann, wenn eine kurze Aktuatorlänge gefordert ist.

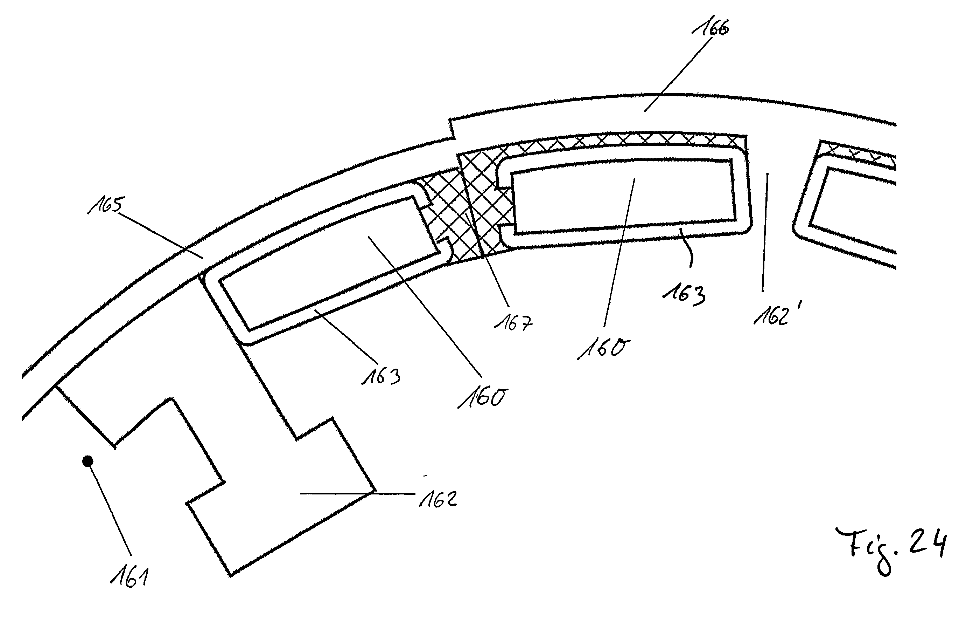

Die Fig. 24 zeigt eine Ausschnittsvergrößerung der Magnetfixierung und Einbettung. Zwei Magnete 160 stützen sich auf den Scheiben 161 mit metallischen Anschlägen 162, 162' ab. Die Scheiben 161 entsprechen dabei den Scheiben 105, 106 bzw. 105', 106' der Rotoren gem der Figuren 6a und 6b. Die Magnete 160 können in den Schalen 163 eingebettet sein, damit Risse in den Permanentmagneten 160 sicher vermieden werden. Die Schalen 163 sind biegesteif und vorzugsweise aus Stahl und stützen sich in der Mitte an den Scheiben 161 und am Ende der Magnetreihe an der Magnetabstützung 162 bzw. 162' ab. Die Permanentmagnete 160 haben vorzugsweise insbesondere quer zur Flußrichtung sehr kleine Ausdehnungskoeffizienten. Zur Kompensation der Temperaturausdehnung sind zwischen den Magneten 160 Stege aus einem Material eingesetzt, z.B. Kunststoff, insbesondere Gießharz, welche die unterschiedliche Längenausdehnung der Scheiben am Umfang relativ zur Magnetbreite kompensiert. Diese Stege sind u.a. auch wegen der unterschiedlichen Temperaturausdehnung in Achsrichtung unterbrochen. Die Magnete 160 können unterschiedlich befestigt werden. So ist auf der linken Seite dargestellt, wie die Magnete 160 mittels eines Spannbandes 165 radial von außen umspannt sind. Die Permanentmagnete können auch in fensterartigen Öffnungen der Scheiben 161 einliegen, wobei zusätzlich ein Gurt 166 die Permanentmagnete 160 umspannt. Der Zwischenraum zwischen Gurt 166 und den Permanentmagneten 160 kann durch einen Kleber oder Gießharz 167 ausgefüllt sein.

Die Fig. 25 zeigt eine weitere mögliche Gestaltung eines Segmentmotors. Die Magnetstufe 170 mit ihrer Erregerspule 171 ist von der Hauptmagnetstufe 172 des Segmentmotors abgesetzt. Die Magnetstufe 170 wirkt auf den zusätzlichen Permanentmagnete 174 tragenden Rotor 173. Der Hauptmagnetstufe 172 ist der Hauptrotor 175 zugeordnet, welcher ebenfalls Permanentmagnete 176 aufweist. Die Magnetstufe 170 erzeugt eine zusätzliche Kraft, welche über einen Betätigungsstift 177 auf den am Hauptrotor 175 angeformten Hebel 178 zur Betätigung z.B. eines Ventils 179 übertragen wird. Die Magnetstufe 170 wird nur bei einem erhöhten Kraftbedarf wirksam, z.B. zum Öffnen eines Auslaßventils. Im Normalfall, z.B. Teillastbetrieb, wirkt nur die Hauptmagnetstufe 172. Die Hauptmagnetstufe 172 ist beispielhaft als Drei-Magnetsystem mit zugehörigem Rotor 175 mit sechs Permanentmagneten 176 ausgeführt. Der Rotor 173 weist einen gedämpften Anschlag 180 auf. Beide Rotoren 173, 175 sind vorzugsweise auf einer Welle gelagert. Der Rotor 173 kann einen größeren Radius aufweisen als der Rotor 175 der Hauptmagnetstufe 172. Für jeden Rotor kann ein Übersetzungsverhältnis von Rotorradius und Krafteinleitungspunkt des Hebels auf das Stellglied eingestellt werden. Durch den Hebel 173 kann eine entsprechend große Zusatzkraft auf das Ventil 179 übertragen werden. Ein entsprechend gewähltes Verhältnis zwischen der vom Hauptrotor 175 aufgebrachten Kraft und der vom Rotor 173 aufgebrachten Kraft bietet sich z.B. dann an, wenn die Gaskraft nur über ca. 30% des Ventilhubes stark einwirkt. Bei diesem Konzept mit kleinem Kraftbedarf für den Normalbetrieb bietet sich an, auch die Hauptmagnetstufe des Segmentmotors mit einem entsprechendem Übersetzungsverhältnis von Rotorradius und Radius zur Ventilachse auszulegen. Da die effektive Masse in der Ventilachse in einem quadratischen Verhältnis zum Übersetzungsverhältnis i steht, würde bei i = 0,8 die effektive Masse 35 % geringer sein. Mit beiden Maßnahmen kann der elektrische Leistungsbedarf um ca. 20% und mehr reduziert werden. Die Ventilhubbewegung erfordert zur Regelung einen Wegsensor. Dieser ist beispielhaft als Wirbelstromsensor 181 ausgebildet und mit dem Gehäuse des Kopplungsgliedes 182 als Target kombiniert.

Die dargestellten Beispiele beschränken die möglichen Anwendungsfälle erfindungsgemäßer Segmentmotoren nicht. Diese Segmentmotoren können grundsätzlich überall dort eingesetzt werden, wo bisher Elektromotoren mit Getriebeübersetzungen oder Exzenter verwendet wurden. Erfindungsgemäße Segmentmotoren können Bauraum, Gewicht und Antriebsenergie einsparen und sind den bisher verwendeten Lösungen im Ansprechverhalten und Wirkungsgrad überlegen.

## Patentansprüche

1. Segmentmotor der zur Erzeugung einer Schwenkbewegung einen schwenkbar gelagerten Rotor (03), einen Stator mit einem feststehenden Außenstator (34; 110, 111; 140, 150) und einem feststehenden Innenstator (12) aufweist,
- wobei der Stator zumindest einen von zumindest einer elektrischen Erregerspule (13) erregten Magnetkreis (10) aufweist, und der Außenstator (34; 110, 111; 140, 150) auf der Außenseite des die Permanentmagnetelemente (08, 103, 136, 142, 152) tragenden Wandungsabschnitts des Rotors (03) angeordnet ist,
- und der Außenstator (34; 110, 111; 140, 150) Pole aufweist, die über Joche magnetisch miteinander in Verbindung sind, wobei jedem Magnetkreis (10) jeweils mindestens eine Erregerspule (13) und jeweils mindestens zwei Permanentmagnetelemente (08, 103, 136, 142, 152) zugeordnet sind;
- und der feststehende Innenstator (12) auf der Innenseite des die Permanentmagnetelemente (08, 103, 136, 142, 152) tragenden Wandungsabschnitts des Rotors (03) angeordnet ist,
- wobei an einem kreissegmentförmigen Wandungsabschnitt des aus einem Grundwerkstoff hergestellten Rotors (03) zumindest zwei Permanentmagnetelemente (08, 103, 136, 142, 152) befestigt sind, die in den Grundwerkstoff eingebettet oder eingeformt sind,
- wobei die Permanentmagnetelemente (08, 103, 136, 142, 152) derart angeordnet sind, dass zwischen Anfangs- und Endstellung des Verstellbereiches nur ein Pol überschritten wird, wobei
ein sich mit dem Rotor (03) mitdrehendes Koppelelement (05, 108, 133, 145, 155) am Rotor (03) angeordnet ist, wobei ein am Koppelelement (05, 108, 133, 145, 155) drehbar gelagertes Kopplungsglied die Schwenkbewegung in eine Linearbewegung umwandelt.

2. Segmentmotor nach Anspruch 1, **dadurch gekennzeichnet, dass** als Grundwerkstoff (19) ein Werkstoff mit geringem spezifischen Gewicht und hoher mechanischer Festigkeit, insbesondere ein hochfester Kunststoff oder ein Leichtmetall, beispielsweise Aluminium oder Magnesium, verwendet wird.

3. Segmentmotor nach Anspruch 1 oder 2, **dadurch gekennzeichnet, dass** der Rotor (03) oder der Hauptbestandteil des Rotors (03) als Gusskörper, insbesondere durch Kunststoffspritzguss oder Leichmetalldruckguss, hergestellt ist.

4. Segmentmotor nach Anspruch 3, **dadurch gekennzeichnet, dass** die Permanentmagnetelemente (08) in den Gusskörper eingegossen oder umspritzt oder eingeklebt sind.

5. Segmentmotor nach einem der Ansprüche 1 bis 4, **dadurch gekennzeichnet, dass** der Rotor (03) neben dem die Permanentmagnetelemente (08) tragenden Wandungsabschnitt (09) eine die Schwenkachse (02) umgreifende Lagerhülse (07) und ein zur Übertragung der Antriebskräfte vorgesehenes Koppelelement (05) aufweist, wobei der Wandungsabschnitt (09) und/oder die Lagerhülse (07) und/oder das Koppelelement (05) durch Verbindungsrippen (15, 17) verbunden sind.

6. Segmentmotor nach Anspruch 5, **dadurch gekennzeichnet, dass** die Verbindungsrippen (15, 17) sich relativ zur Schwenkachse (02) des Rotors (03) radial nach außen erstrecken und sich dabei insbesondere auf durchgehenden Wandungen und/oder Wandungsabschnitten abstützen.

7. Segmentmotor nach einem der Ansprüche 1 bis 6, **dadurch gekennzeichnet, dass** auf der Innenseite des die Permanentmagnetelemente (08) tragenden Wandungsabschnitts (09) zumindest eine Verstärkungsrippe (16) vorgesehen ist.

8. Segmentmotor nach einem der Ansprüche 1 bis 7, **dadurch gekennzeichnet, dass** am Innenumfang und/oder Außenumfang des die Permanentmagnetelemente (08) tragenden Wandungsabschnitts (09) des Rotors (03) Vertiefungen (22, 23) zur Aufnahme der Permanentmagnetelemente (08) vorgesehen sind.

9. Segmentmotor nach Anspruch 8, **dadurch gekennzeichnet, dass** die Vertiefungen (22, 23) einen keilförmigen Querschnitt aufweisen.

10. Segmentmotor nach Anspruch 8 oder 9, **dadurch gekennzeichnet, dass** die Permanentmagnetelemente (08) in die Vertiefungen (22, 23) eingegossen oder umspritzt oder eingeklebt sind.

11. Segmentmotor nach einem der Ansprüche 1 bis 10, **dadurch gekennzeichnet, dass** die Permanentmagnetelemente (08) am Außenumfang und/oder am Innenumfang des die Permanentmagnetelemente (08) tragenden Wandungsabschnitts (09) durch zumindest ein Abdeckelement (20, 21) überdeckt werden.

12. Segmentmotor nach Anspruch 11, **dadurch gekennzeichnet, dass** das Abdeckelement (20) vom Grundwerkstoff (19) des Rotors (03) gebildet wird.

13. Segmentmotor nach Anspruch 11, **dadurch gekennzeichnet, dass** das Abdeckelement (21) von einer Abdeckfolie gebildet wird.

14. Segmentmotor nach einem der Ansprüche 1 bis 13, **dadurch gekennzeichnet, dass** in Richtung der Längsachsen der Permanentmagnetelemente (08, 18) zumindest zwei voneinander getrennte Vertiefungen (22, 23) hintereinander vorgesehen sind, in denen getrennt voneinander jeweils ein Permanentmagnetelement (08, 18) aufgenommen ist.

15. Segmentmotor nach einem der Ansprüche 1 bis 14, **dadurch gekennzeichnet, dass** der Rotor (03) aus Kunststoff hergestellt ist und die Vertiefungen (22) zur Stirnseite des Rotors (03) hin geschlossene Endquerschnitte aufweisen.

16. Segmentmotor nach einem der Ansprüche 1 bis 14, **dadurch gekennzeichnet, dass** der Rotor (03a) aus Leichtmetall, insbesondere Aluminium, hergestellt ist und die Vertiefungen (23) zur Stirnseite des Rotors hin offene Endquerschnitte aufweisen und durch elektrisch nicht leitende Elemente (16a) geschlossen werden.

17. Segmentmotor nach einem der Ansprüche 1 bis 16, **dadurch gekennzeichnet, dass** der Magnetkreis (10) aus einem feststehenden Außenjoch (11), das auf der Außenseite des die Permanentmagnetelemente (08) tragenden Wandungsabschnitts (09) des Rotors (03) angeordnet ist, und aus einem feststehenden Innenjoch (12), das auf der Innenseite des die Permanentmagnetelemente (08) tragenden Wandungsabschnitts (09) des Rotors (03) angeordnet ist, aufgebaut ist.

18. Segmentmotor nach Anspruch 17, **dadurch gekennzeichnet, dass** am Außenjoch (11) und/oder am Innenjoch (12) zumindest ein überstehendes Abstützelement, insbesondere eine überstehende Lamelle (11 a), vorgesehen ist, das eine Ausnehmung Rotor (03) durchgreift und am gegenüberliegenden Innenjoch (12) und/oder Außenjoch (11) abstützend zur Anlage kommt.

19. Segmentmotor nach einem der Ansprüche 1 bis 16, **dadurch gekennzeichnet, dass** der Magnetkreis (46) aus einem feststehenden Außenjoch (43), das auf der Außenseite des die Permanentmagnetelemente (08, 47) tragenden Wandungsabschnitts des Rotors (44) angeordnet ist, und zumindest einem am Rotor (44) befestigten, insbesondere jochförmigen Magnetflusselement (45, 48) besteht.

20. Segmentmotor nach einem der Ansprüche 1 bis 19, **dadurch gekennzeichnet, dass** am Außenjoch (11) zumindest ein Nebenjoch (19) vorgesehen ist, mit dem der Rotor (03) magnetisch in einer Endlage fixiert werden kann.

21. Segmentmotor nach einem der Ansprüche 1 bis 20, **dadurch gekennzeichnet, dass** der Magnetkreis (10), insbesondere das Außenjoch (11) und/oder das Innenjoch (12) und/oder Nebenjoch (19) und/oder das Magnetflusselement (45, 48), zumindest jeweils ein Lamellenblechpaket aus Weicheisen aufweist.

22. Segmentmotor nach einem der Ansprüche 1 bis 21, **dadurch gekennzeichnet, dass** zur Erregung eines Magnetkreises (33) zwei insbesondere synchron oder unabhängig voneinander betreibbare Erregerspulen (36) vorgesehen sind.

23. Segmentmotor nach einem der Ansprüche 1 bis 22, **dadurch gekennzeichnet, dass** der Segmentmotor (37, 41) zwei oder mehr insbesondere synchron oder unabhängig voneinander erregbare Magnetkreise (40, 46) aufweist.

24. Segmentmotor nach Anspruch 23, **dadurch gekennzeichnet, dass** mehrere Magnetkreise (46) einem gemeinsamen die Permanentmagnetelemente (08, 47) tragenden Wandungsabschnitt des Rotors (44) zugeordnet sind.

25. Segmentmotor nach Anspruch 23, **dadurch gekennzeichnet, dass** mehrere, insbesondere übereinander angeordnete Magnetkreise (40) getrennten und jeweils für sich Permanentmagnetelemente (08) tragenden Wandungsabschnitten des Rotors (38) zugeordnet sind.

26. Segmentmotor nach einem der Ansprüche 1 bis 25, **dadurch gekennzeichnet, dass** die Permanentmagnetelemente (08) zueinander beabstandet in den Grundwerkstoff (19) eingebettet sind.

27. Segmentmotor nach Anspruch 26, **dadurch gekennzeichnet, dass** der Abstand (Δ_{PM}) zwischen benachbarten Permanentmagnetelementen (08b) erheblich kleiner ist als die Breite (L_{PM}) der Permanentmagnetelemente (08b), insbesondere kleiner als 20% der Breite (L_{PM}) der Permanentmagnetelemente (08b) ist.

28. Segmentmotor nach Anspruch 26 oder 27, **dadurch gekennzeichnet, dass** der Abstand (Δ_{PM}) zwischen ausgewählten oder allen benachbarten Permanentmagnetelementen gleich Null ist.

29. Segmentmotor nach einem der Ansprüche 1 bis 28, **dadurch gekennzeichnet, dass** Permanentmagnetelemente mit entgegengesetzter Orientierung (vielpoliger P-Magnet) in einem Wandungsabschnitt zusammengefaßt sind.

30. Segmentmotor nach einem der Ansprüche 1 bis 29, **dadurch gekennzeichnet, dass** die Breite (L_{PM}) der Permanentmagnetelemente (08b) in Bewegungsrichtung (28, 31) größer oder kleiner als der Querschnitt des zugeordneten Magnetkreises (10), insbesondere die Breite des zugeordneten Außenjochs (11) und/oder Innenjochs (12), ist.

31. Segmentmotor nach einem der Ansprüche 1 bis 30, **dadurch gekennzeichnet, dass** mehrere Permanentmagnetelemente (08, 18), insbesondere zwei bis vier Elemente je Magnetkreis (10), in Bewegungsrichtung (28, 31) hintereinander am Rotor (03) vorgesehen sind.

32. Segmentmotor nach einem der Ansprüche 1 bis 31, **dadurch gekennzeichnet, dass** aufeinander folgende Permanentmagnetelemente (08, 18) eine entgegengesetzte Orientierung der Magnetisierungspole ausweisen (N/S folgt auf S/N und umgekehrt).

33. Segmentmotor nach einem der Ansprüche 1 bis 32, **dadurch gekennzeichnet, dass** in der Nähe der Endlagen des die Permanentmagnetelemente tragenden Wandungsabschnitts Permanentmagnetelemente gleicher Orientierung zwischen Nord- und Südpol eines Magnetkreises angeordnet sind.

34. Segmentmotor nach einem der Ansprüche 1 bis 33, **dadurch gekennzeichnet, dass** Permanentmagnetelemente mit unterschiedlicher Breite vorgesehen sind, insbesondere dass das Permanentmagnetelement zwischen den Magnetkreisen länger ist als die Magnete links und rechts der Magnetkreise.

35. Segmentmotor nach einem der Ansprüche 1 bis 34, **dadurch gekennzeichnet, dass** die Eintauchtiefen (Aₚ) der Permanentmagnetelemente an den Endlagen asymmetrisch zur Jochpolmitte positioniert sind.

36. Segmentmotor nach einem der Ansprüche 1 bis 35, **dadurch gekennzeichnet, dass** der Segmentmotor (01, 32, 37, 41, 50, 53, 56) Teil eines Ventilantriebs zum Antrieb eines Ventils (55) in einem Verbrennungsmotor ist.

37. Segmentmotor nach Anspruch 35, **dadurch gekennzeichnet, dass** der Segmentmotor bei Antrieb des Ventils alternierend zwischen zwei Endlagen bewegt wird, wobei der Segmentmotor derart ausgebildet ist, dass die Antriebskraft (62, 63) des Segmentmotors ohne Umpolung der Erregung des Magnetkreises bei Bewegung aus der ersten Endlage in die zweite Endlage und umgekehrt an einem Umkehrpunkt (U) eine Kraftrichtungsumkehr erfährt.

38. Segmentmotor nach Anspruch 36, **dadurch gekennzeichnet, dass** der Segmentmotor derart ausgebildet ist, dass der Kraftverlauf (62, 63) der Antriebskraft zwischen den beiden Endlagen asymmetrisch zum Umkehrpunkt (U) verläuft.

39. Segmentmotor nach einem der Ansprüche 35 bis 37, **dadurch gekennzeichnet, dass** im Ventilantrieb zwei Segmentmotoren (32, 37, 53) nebeneinander oder übereinander, insbesondere gut wärmeleitend durch Schrauben, auf dem Motorblock des Verbrennungsmotors befestigt sind.

40. Segmentmotor nach einem der Ansprüche 35 bis 38, **dadurch gekennzeichnet, dass** im Ventilantrieb zwei Segmentmotoren (50, 53) übereinander auf dem Motorblock des Verbrennungsmotors befestigt sind.

41. Segmentmotor nach Anspruch 38 oder 39, **dadurch gekennzeichnet, dass** zwischen den nebeneinander oder übereinander angeordneten Segmentmotoren (53) ein Funktionselement des Motors, insbesondere eine Zündkerze oder eine Glühkerze oder ein Einspritzventil, angeordnet ist.

42. Segmentmotor nach Anspruch 1, **dadurch gekennzeichnet, dass** die hintereinander angeordneten Segmentmotoren (01) eine gemeinsame Lagerachse (07) zur Lagerung der verschiedenen Rotoren (03) aufweisen.

43. Segmentmotor nach einem der Ansprüche 35 bis 42, **dadurch gekennzeichnet, dass** die Segmentmotoren (50) jeweils zueinander weisende, insbesondere ebene Kontaktflächen (52) aufweisen, die bei der Montage aneinander zur Anlage kommen.

44. Segmentmotor nach einem der Ansprüche 35 bis 43, **dadurch gekennzeichnet, dass** im Segmentmotor (01) zumindest ein Sensor (25) zur Bestimmung der Position des Rotors (03) vorgesehen ist.

45. Segmentmotor nach einem der Ansprüche 35 bis 44, **dadurch gekennzeichnet, dass** am Ventilantrieb, insbesondere am Segmentmotor, Kühleinrichtungen zur Abfuhr von Abwärme, insbesondere Kühlrippen und/oder Kühlkanäle (61) zur Durchleitung einer Kühlflüssigkeit, vorgesehen sind.

46. Segmentmotor nach einem der Ansprüche 35 bis 45, **dadurch gekennzeichnet, dass** die Antriebskraft des Segmentmotors mit variablem Übersetzungsverhältnis von einem Antriebshebelarm, an dem die Antriebskraft des Segmentmotors eingeleitet wird, zu einem Abtriebshebelarm, an dem die Antriebskraft vom Segmentmotor abgeleitet wird, auf einen nachgeordneten Ventilantrieb übertragen wird.

47. Segmentmotor nach Anspruch 46, **dadurch gekennzeichnet, dass** mit dem Segmentmotor ein Auslassventil angetrieben wird und ein Übersetzungsverhältnis größer 1, insbesondere ein Übersetzungsverhältnis von 1,1 bis 1,4, vorgesehen ist.

48. Segmentmotor nach Anspruch 46, **dadurch gekennzeichnet, dass** mit dem Segmentmotor ein Einlassventil angetrieben wird und ein Übersetzungsverhältnis kleiner 1, insbesondere ein Übersetzungsverhältnis von 0,6 bis 0,9, vorgesehen ist.

49. Segmentmotor nach einem der Ansprüche 1 bis 35, **dadurch gekennzeichnet, dass** der Segmentmotor (56b) Teil eines Klappenantriebs zum Antrieb einer Stellklappe (58) ist.

50. Segmentmotor nach einem der Ansprüche 1 bis 35, **dadurch gekennzeichnet, dass** der Segmentmotor (56c) Teil eines Scheibenwischerantriebs zum Antrieb eines Scheibenwischers (59) ist.

51. Segmentmotor nach einem der vorhergehenden Ansprüche, **dadurch gekennzeichnet, dass** die im Stator eingebetteten Erregerspulen mehrlagige Form- oder Schichtspulen sind.

52. Segmentmotor nach Anspruch 51, **dadurch gekennzeichnet, dass** die einem Joch zugeordnete Form- oder Schichtspule zu beiden Seiten des Jochs unterschiedliche Abmessungen, insbesondere Breiten aufweist, wobei die aneinandergrenzenden Stirnseiten der einzelnen Lagen der Form- oder Schichtspule miteinander verschweißt sind.

53. Segmentmotor nach einem der vorhergehenden Ansprüche, **dadurch gekennzeichnet, dass** das Statorgehäuse Kühlkanäle (101) aufweist.

54. Segmentmotor nach einem der vorhergehenden Ansprüche, **dadurch gekennzeichnet, dass** mindestens zwei voneinander beabstandete Scheiben (105, 106; 105', 106') verdrehfest auf einer Welle (116, 116') angeordnet sind, welche die Permanentmagnete (103, 103') tragen.

55. Segmentmotor nach einem der vorhergehenden Ansprüche, **dadurch gekennzeichnet, dass** an den Stirnseiten und/oder Außenseiten der Permanentmagnete (103) Verstärkungselemente (124) angeordnet sind.

56. Segmentmotor nach einem der vorhergehenden Ansprüche, **dadurch gekennzeichnet, dass** die Permanentmagnete in verbiegungssteifen Gehäusen bzw. Schalen (163) angeordnet sind, welche insbesondere fensterartige Öffnungen für den Magnetfluß aufweisen.

57. Segmentmotor nach Anspruch 55, **dadurch gekennzeichnet, dass** sich die Gehäuse bzw. Schalen (163) auf den Scheiben (105,106; 105',106') abstützen.

58. Segmentmotor nach einem der vorhergehenden Ansprüche, **dadurch gekennzeichnet, dass** die Permanentmagnete durch Stege voneinander beabstandet sind, durch welche eine Kompensation der Temperaturlängenänderung zwischen Permanentmagneten und Scheiben erfolgt.

59. Segmentmotor nach Anspruch 57, **dadurch gekennzeichnet, dass** die Stege in der Achsrichtung mehrteilig sind.

60. Segmentmotor nach einem der vorhergehenden Ansprüche, **dadurch gekennzeichnet, dass** der Rotor auf einer Welle angeordnet ist, die verdrehfest oder über ein Getriebe mit einem Stellglied, insbesondere einer Drosselklappe in Verbindung ist.

61. Segmentmotor nach einem der vorhergehenden Ansprüche, **dadurch gekennzeichnet, dass** der Segmentmotor zwei Permanentmagnete (174, 176) tragende Rotoren (173, 175) aufweist, welche auf einer Welle drehbar gelagert sind und über zwei voneinander getrennten Statoren bzw. Magnetstufen (170, 172) antreibbar sind.

62. Segmentmotor nach Anspruch 60, **dadurch gekennzeichnet, dass** die Magnetstufen (170, 172) jeweils eine Anzahl von Polen und mindestens eine Erregerspule aufweisen, welche in einer Ebene angeordnet sind.

63. Segmentmotor nach Anspruch 60 oder 61, **dadurch gekennzeichnet, dass** der eine Stator (172) zur Erzielung einer größeren Kraft bzw. eines größeren Drehmoments mehr Pole aufweist, als der andere Stator (170).

64. Segmentmotor nach einem der Ansprüche 60 bis 62, **dadurch gekennzeichnet, dass** in einem bestimmten Verdrehwinkelbereich der eine Rotor (173) den anderen Rotor (175) mittels eines Kraftübertragungselements (177) kraftbeaufschlagen kann.

65. Segmentmotor nach einem der Ansprüche 60 bis 62, **dadurch gekennzeichnet, dass** der eine Rotor (173) einen Anschlag, insbesondere mit einem Dämpfungselement, aufweist, wobei der Anschlag den Verdrehbereich des Rotors (173) begrenzt.

66. Segmentmotor nach Anspruch 63 oder 64, **dadurch gekennzeichnet, dass** der Rotor, der den anderen kraftbeaufschlagt einen größeren Radius aufweist.

67. Segmentmotor nach einem der Ansprüche 60 bis 65, **dadurch gekennzeichnet, dass** der Zusatzrotor (173) in der Anfangsphase der Bewegung, insbesondere beim Öffnen oder Schließen eines Stellgliedes, eine Zusatzkraft auf den anderen Rotor (175) ausübt.

## Claims

1. Segmented motor which, in order to generate a swivel movement, has a swivelably mounted rotor (03), a stator with a stationary outer stator (34; 110; 111; 140, 150) and a stationary inner stator (12), wherein
- the stator has at least one magnetic circuit (10) which is excited by at least one electrical excitation coil (13), and the outer stator (34; 110; 111; 140, 150) is arranged on the outside of the wall portion, supporting the permanent magnet elements (08, 103, 136, 142, 152), of the rotor (03),
- and the outer stator (34; 110; 111; 140, 150) has poles which are connected together magnetically by yokes, wherein associated with each magnetic circuit (10) are in each case at least one excitation coil (13) and in each case at least two permanent magnet elements (08, 103, 136, 142, 152);
- and the stationary inner stator (12) is arranged on the inside of the wall portion, supporting the permanent magnet elements (08, 103, 136, 142, 152), of the rotor (03),
- wherein attached to a circular segment-shaped wall portion of the rotor (03), produced from a base material, are at least two permanent magnet elements (08, 103, 136, 142, 152) which are embedded or moulded into the base material,
- wherein the permanent magnet elements (08, 103, 136, 142, 152) are arranged such that only one pole is overstepped between the starting position and the end position of the adjustment region,
wherein a coupling element (05, 108, 133, 145, 155) which rotates with the rotor (03) is arranged on the rotor (03), wherein a coupling member mounted rotatably on the coupling element (05, 108, 133, 145, 155) converts the swivel movement into a linear movement.

2. Segmented motor according to Claim 1, **characterised in that** a material with a low specific weight and a high mechanical strength, in particular a high-strength plastics or a light metal, for example aluminium or magnesium is used as the base material (19).

3. Segmented motor according to Claim 1 or 2, **characterised in that** the rotor (03) or the main component of the rotor (03) is produced as a cast body, in particular by plastics injection moulding or by light metal high pressure die casting.

4. Segmented motor according to Claim 3, **characterised in that** the permanent magnet elements (08) are cast into, overmoulded or adhesively bonded into the cast body.

5. Segmented motor according to any one of Claims 1 to 4, **characterised in that** the rotor (03) has next to the wall portion (09) supporting the permanent magnet elements (08), a bearing sleeve (07) engaging around the swivel pin (02), and a coupling element (05) which is provided to transmit the drive forces, wherein the wall portion (09) and/or the bearing sleeve (07) and/or the coupling element (05) are connected by connecting ribs (15, 17).

6. Segmented motor according to Claim 5, **characterised in that** the connecting ribs (15, 17) extend radially outwards relative to the swivel pin (02) of the rotor (03) and are supported in particular on continuous walls and/or wall portions.

7. Segmented motor according to any one of Claims 1 to 6, **characterised in that** at least one reinforcing rib (16) is provided on the inside of the wall portion (09) supporting the permanent magnet elements (08).

8. Segmented motor according to any one of Claims 1 to 7, **characterised in that** recesses (22, 23) for receiving the permanent magnet elements (08) are provided in the inner periphery and/or outer periphery of the wall portion (09), supporting the permanent magnet elements (08), of the rotor (03).

9. Segmented motor according to Claim 8, **characterised in that** the recesses (22, 23) have a wedge-shaped cross section.

10. Segmented motor according to Claim 8 or 9, **characterised in that** the permanent magnet elements (08) are cast into, overmoulded or adhesively bonded into the recesses (22, 23).

11. Segmented motor according to any one of Claims 1 to 10, **characterised in that** the permanent magnet elements (08) are covered by at least one cover element (20, 21) on the outer periphery and/or on the inner periphery of the wall portion (09), supporting the permanent magnet elements (08).

12. Segmented motor according to Claim 11, **characterised in that** the cover element (20) is formed by the base material (19) of the rotor (03).

13. Segmented motor according to Claim 11, **characterised in that** the cover element (20) is formed by a cover film.

14. Segmented motor according to any one of Claims 1 to 13, **characterised in that** provided in tandem in the direction of the longitudinal axes of the permanent magnet elements (08, 18) are at least two mutually separated recesses (22, 23) in which a respective permanent magnet element (08, 18) is received separately from each other.

15. Segmented motor according to any one of Claims 1 to 14, **characterised in that** the rotor (03) is produced from plastics and the recesses (22) have end cross sections which are closed towards the end face of the rotor (03).

16. Segmented motor according to any one of Claims 1 to 14, **characterised in that** the rotor (03a) is produced from light metal, in particular from aluminium, and the recesses (23) have end cross sections which are open towards the end face of the rotor and are closed by electrically non-conductive elements (16a).

17. Segmented motor according to any one of Claims 1 to 16, **characterised in that** the magnetic circuit (10) is constructed from a stationary outer yoke (11) which is arranged on the outside of the wall portion (09), supporting the permanent magnet elements (08), of the rotor (03), and from a stationary inner yoke (12) which is arranged on the inside of the wall portion (09), supporting the permanent magnet elements (08), of the rotor (03).

18. Segmented motor according to Claim 17, **characterised in that** provided on the outer yoke (11) and/or on the inner yoke (12) is at least one projecting support element, in particular a projecting lamella (11 a) which engages through a recess of the rotor (03) and comes to rest in a supporting manner on the opposite inner yoke (12) and/or outer yoke (11).

19. Segmented motor according to any one of Claims 1 to 16, **characterised in that** the magnetic circuit (46) consists of a stationary outer yoke (43) which is arranged on the outside of the wall portion, supporting the permanent magnet elements (08, 47), of the rotor (44), and of at least one particularly yoke-shaped magnetic flux element (45, 48) which is attached to the rotor (44).

20. Segmented motor according to any one of Claims 1 to 19, **characterised in that** provided on the outer yoke (11) is at least one auxiliary yoke (19) by which the rotor (03) can be fixed magnetically in an end position.

21. Segmented motor according to any one of Claims 1 to 20, **characterised in that** the magnetic circuit (10), in particular the outer yoke (11) and/or the inner yoke (12) and/or the auxiliary yoke (19) and/or the magnetic flux element (45, 48) has at least one respective packet of lamellar sheets consisting of soft iron.

22. Segmented motor according to any one of Claims 1 to 21, **characterised in that** two excitation coils (36) which can be operated in particular synchronously or independently of one another are provided to excite a magnetic circuit (33).

23. Segmented motor according to any one of Claims 1 to 22, **characterised in that** the segmented motor (37, 41) has two or more magnetic circuits (40, 46) which can be excited in particular synchronously or independently of one another.

24. Segmented motor according to Claim 23, **characterised in that** a plurality of magnetic circuits (46) are associated with a common wall portion, supporting the permanent magnet elements (08, 47), of the rotor (44).

25. Segmented motor according to Claim 23, **characterised in that** a plurality of particularly superimposed magnetic circuits (40) are associated with separate wall portions of the rotor (38) which each respectively support permanent magnet elements (08),

26. Segmented motor according to any one of Claims 1 to 25, **characterised in that** the permanent magnet elements (08) are embedded in the base material (19) at a distance from one another.

27. Segmented motor according to Claim 26, **characterised in that** the distance (Δ_{PM}) between adjacent permanent magnet elements (08b) is considerably less than the width (L_{PM}) of the permanent magnet elements (08b), in particular less than 20 % of the width (L_{PM}) of the permanent magnet elements (08b).

28. Segmented motor according to Claim 26 or 27, **characterised in that** the distance (Δ_{PM}) between selected or between all adjacent permanent magnet elements equals zero.

29. Segmented motor according to any one of Claims 1 to 28, **characterised in that** permanent magnet elements having an opposite orientation (four-pole P magnet) are combined in one wall portion.

30. Segmented motor according to any one of Claims 1 to 29, **characterised in that** the width (L_{PM}) of the permanent magnet elements (08b) in the direction of movement (28, 31) is greater or smaller than the cross section of the associated magnetic circuit (10), in particular the width of the associated outer yoke (11) and/or inner yoke (12).

31. Segmented motor according to any one of Claims 1 to 30, **characterised in that** a plurality of permanent magnet elements (08, 18), in particular two to four elements per magnetic circuit (10) are provided in tandem on the rotor (03) in the direction of movement (28, 31).

32. Segmented motor according to any one of Claims 1 to 31, **characterised in that** successively following permanent magnet elements (08, 18) have an opposite orientation of the magnetisation poles (N/S follows S/N and vice versa).

33. Segmented motor according to any one of Claims 1 to 32, **characterised in that** permanent magnet elements of the same orientation are arranged between the north pole and south pole of a magnetic circuit in the vicinity of the end positions of the wall portion supporting the permanent magnet elements.

34. Segmented motor according to any one of Claims 1 to 33, **characterised in that** permanent magnet elements having a different width are provided, particularly **in that** the permanent magnet element between the magnetic circuits is longer than the magnets on the right and left of the magnetic circuits.

35. Segmented motor according to any one of Claims 1 to 34, **characterised in that** the immersion depths (Aₚ) of the permanent magnet elements in the end positions are positioned asymmetrically to the pole centre of the yoke.

36. Segmented motor according to any one of Claims 1 to 35, **characterised in that** the segmented motor (01, 32, 37, 41, 50, 53, 56) is part of a valve drive for driving a valve (55) in an internal combustion engine.

37. Segmented motor according to Claim 35, **characterised in that** while the valve is being driven, the segmented motor is moved in an alternating manner between two end positions, the segmented motor being configured such that the drive force (62, 63) of the segmented motor undergoes a reversal in the direction of force at a reversal point (U) while moving out of the first end position into the second end position and vice versa, without a pole reversal of the excitation of the magnetic circuit.

38. Segmented motor according to Claim 36, **characterised in that** the segmented motor is configured such that the force progression (62, 63) of the drive force runs asymmetrically to the reversal point (U) between the two end positions.

39. Segmented motor according to any one of Claims 35 to 37, **characterised in that** in the valve drive, two segmented motors (32, 37, 53) are fastened next to one another or one above the other by screws on the engine block of the internal combustion engine, particularly in an effectively heat-conducting manner.

40. Segmented motor according to any one of Claims 35 to 38, **characterised in that** in the valve drive, two segmented motors (50, 53) are fastened one above the other on the engine block of the internal combustion engine.

41. Segmented motor according to Claim 38 or 39, **characterised in that** arranged between the segmented motors (53) which are positioned next to one another or one above the other, is a functional element of the motor, in particular a spark plug or a glow plug or an injection valve.

42. Segmented motor according to Claim 1, **characterised in that** the segmented motors (01) arranged in tandem have a common bearing shaft (07) for mounting the different rotors (03).

43. Segmented motor according to any one of Claims 35 to 42, **characterised in that** the segmented motors (50) have mutually facing, in particular planar contact surfaces (52) which come to rest against each other during assembly.

44. Segmented motor according to any one of Claims 35 to 43, **characterised in that** at least one sensor (25) for determining the position of the rotor (03) is provided in the segmented motor (01).

45. Segmented motor according to any one of Claims 35 to 44, **characterised in that** cooling means for removing waste heat, in particular cooling ribs and/or cooling channels (61) for conveying a coolant are provided on the valve drive, in particular on the segmented motor.

46. Segmented motor according to any one of Claims 35 to 45, **characterised in that** the drive force of the segmented motor is transmitted onto a downstream valve drive with a variable transmission ratio from a driving lever arm at which the drive force of the segmented motor is introduced, to an output lever arm at which the drive force is removed from the segmented motor.

47. Segmented motor according to Claim 46, **characterised in that** an outlet valve is driven by the segmented motor and a transmission ratio of more than 1, in particular a transmission ratio of 1.1 to 1.4 is provided.

48. Segmented motor according to Claim 46, **characterised in that** an inlet valve is driven by the segmented motor and a transmission ratio of less than 1, in particular a transmission ratio of 0.6 to 0.9 is provided.

49. Segmented motor according to any one of Claims 1 to 35, **characterised in that** the segmented motor (56b) is part of a flap drive for driving a regulating flap (58).

50. Segmented motor according to any one of Claims 1 to 35, **characterised in that** the segmented motor (56c) is part of a windscreen wiper drive for driving a windscreen wiper (59).

51. Segmented motor according to any one of the preceding claims, **characterised in that** the excitation coils embedded in the stator are multilayered preformed coils or stranded coils.

52. Segmented motor according to Claim 51, **characterised in that** the preformed coil or stranded coil associated with a yoke has different dimensions, in particular widths, on both sides of the yoke, the adjoining end faces of the individual layers of the preformed coil or stranded coil being welded together.

53. Segmented motor according to any one of the preceding claims, **characterised in that** the stator housing has cooling channels (101).

54. Segmented motor according to any one of the preceding claims, **characterised in that** at least two mutually spaced apart discs (105, 106; 105', 106') are arranged in an anti-twist manner on a shaft (116, 116'), said discs supporting the permanent magnets (103, 103').

55. Segmented motor according to any one of the preceding claims, **characterised in that** reinforcing elements (124) are arranged on the end faces and/or on the outsides of the permanent magnets (103).

56. Segmented motor according to any one of the preceding claims, **characterised in that** the permanent magnets are arranged in bend-resistant housings or shells (163) which have in particular window-like openings for the magnetic flux.

57. Segmented motor according to Claim 55, **characterised in that** the housings or shells (163) are supported on the discs (105, 106; 105', 106').

58. Segmented motor according to any one of the preceding claims, **characterised in that** the permanent magnets are spaced apart from one another by webs, by which the change in temperature length between permanent magnets and discs is compensated.

59. Segmented motor according to Claim 57, **characterised in that** the webs are in several parts in the axial direction.

60. Segmented motor according to any one of the preceding claims, **characterised in that** the rotor is arranged on a shaft which is rotationally engaged with, or is connected by a transmission to an actuator, in particular a throttle valve.

61. Segmented motor according to any one of the preceding claims, **characterised in that** the segmented motor has two rotors (173, 175) which support permanent magnets (174, 176) and which are mounted rotatably on a shaft and can be driven by two mutually separated stators or magnetic stages (170, 172).

62. Segmented motor according to Claim 60, **characterised in that** the magnetic stages (170, 172) respectively have a number of poles and at least one excitation coil which are arranged in one plane.

63. Segmented motor according to Claim 60 or 61, **characterised in that** in order to achieve a greater force or a greater torque, the one stator (172) has more poles than the other stator (170).

64. Segmented motor according to any one of Claims 60 to 62, **characterised in that** within a particular rotational angle range, the one rotor (173) can subject the other rotor (175) to a force by means of a force transmission element (177).

65. Segmented motor according to any one of Claims 60 to 62, **characterised in that** the one rotor (173) has a stop, in particular with a damping element, the stop restricting the rotational range of the rotor (173).

66. Segmented motor according to either Claim 63 or 64, **characterised in that** the rotor which subjects the other rotor to a force has a greater radius.

67. Segmented motor according to any one of Claims 60 to 65, **characterised in that** the additional rotor (173) exerts an additional force on the other rotor (175) in the initial phase of movement, particularly during the opening or closing of an actuator.

## Revendications

1. Moteur segmenté pour produire un mouvement pivotant, comportant un rotor (03) monté pivotant, un stator doté d'un stator extérieur fixe (34; 110, 111; 140, 150) et d'un stator intérieur fixe (12),
- auquel cas le stator comporte au moins un circuit magnétique (10) excité par au moins une bobine d'excitation électrique (13), et le stator extérieur (34; 110, 111; 140, 150) est agencé sur le côté extérieur de la section de paroi du rotor (03) portant les éléments d'aimants permanents (08, 103, 136, 142, 152),
- et le stator extérieur (34; 110, 111 ; 140, 150) présente des pôles qui sont magnétiquement en contact l'un avec l'autre par l'intermédiaire de culasses, auquel cas, à chaque fois, au moins une bobine d'excitation (13) et au moins deux éléments d'aimants permanent (08, 103, 136, 142, 152) sont affectés à chaque circuit magnétique (10),
- et le stator intérieur fixe (12) est agencé sur le côté intérieur de la section de paroi du rotor (03) portant les éléments d'aimants permanents (08, 103, 136, 142, 152),
- auquel cas au moins deux éléments d'aimants permanents (08, 103, 136, 142, 152), étant formés par ou incorporés dans un matériau de base, sont fixés sur une section de paroi (09), en forme de segment de cercle, du rotor (03) fabriqué en un matériau de base,
- auquel cas les éléments d'aimants permanents (08, 103, 136, 142, 152) sont agencés de telle sorte qu'un seul pôle est dépassé entre la position initiale et la position finale de la zone de réglage,
auquel cas un élément de couplage (05, 108, 133, 145, 155) tournant avec le rotor (03) est agencé sur celui-ci (03), auquel cas un organe d'accouplement monté de façon à pouvoir tourner transforme le mouvement pivotant en un mouvement linéaire.

2. Moteur segmenté selon la revendication 1, **caractérisé en ce que** l'on utilise en tant que matériau de base (19) un matériau ayant un faible poids spécifique et une haute résistance mécanique, en particulier une matière synthétique à haute résistance ou un métal léger, par exemple de l'aluminium ou du magnésium.

3. Moteur segmenté selon la revendication 1 ou 2, **caractérisé en ce que** le rotor (03) ou l'élément principal du rotor (03) est fabriqué en tant que corps moulé, notamment par injection plastique ou en alliage léger coulé sous pression.

4. Moteur segmenté selon la revendication 3, **caractérisé en ce que** les éléments d'aimants permanents (08) sont coulés, enrobés ou collés dans le corps moulé.

5. Moteur segmenté selon une des revendications de 1 à 4, **caractérisé en ce que** le rotor (03) présente, à proximité de la section de paroi (09) portant les éléments d'aimants permanents (08), un coussinet de palier (07) enveloppant l'axe de pivotement (02) et un élément de couplage (05) prévu pour transmettre les forces d'entraînement, auquel cas la section de paroi (09) et/ou le coussinet de palier (07) et/ou l'élément de couplage (05) sont reliés par l'intermédiaire de nervures de liaison (15, 17).

6. Moteur segmenté selon la revendication 5, **caractérisé en ce que** les nervures de liaison (15, 17) s'étendent radialement vers l'extérieur par rapport à l'axe de pivotement (02) du rotor (03) et s'appuient à cet effet notamment sur les parois et/ou les sections de paroi continues.

7. Moteur segmenté selon une des revendications de 1 à 6, **caractérisé en ce que** l'on prévoit sur le côté intérieur de la section de paroi (09) portant les éléments d'aimants permanents (08) au moins une nervure de renforcement (16).

8. Moteur segmenté selon une des revendications de 1 à 7, **caractérisé en ce que** l'on prévoit des évidements (22, 23) destinés à loger les éléments d'aimants permanents (08) sur la périphérie intérieure et/ou périphérie extérieure de la section de paroi (09) du rotor (03) portant les éléments d'aimants permanents (08).

9. Moteur segmenté selon la revendication 8, **caractérisé en ce que** les évidements (22, 23) présentent une section transversale cunéiforme.

10. Moteur segmenté selon la revendication 8 ou 9, **caractérisé en ce que** les éléments d'aimants permanents (08) sont coulés, enrobés ou collés dans les évidements (22, 23).

11. Moteur segmenté selon une des revendications de 1 à 10, **caractérisé en ce que** les éléments d'aimants permanents (08) sont recouverts, sur la périphérie extérieure et/ou la périphérie intérieure de la section de paroi (09) portant les éléments d'aimants permanents (08), par au moins un élément de recouvrement (20, 21).

12. Moteur segmenté selon la revendication 11, **caractérisé en ce que** l'élément de recouvrement (20) est formé par le matériau de base (19) du rotor (03).

13. Moteur segmenté selon la revendication 11, **caractérisé en ce que** l'élément de recouvrement (21) est formé par une feuille de recouvrement.

14. Moteur segmenté selon une des revendications de 1 à 13, **caractérisé en ce que** l'on prévoit, en direction des axes longitudinaux des éléments d'aimants permanents (08, 18), au moins deux évidements mutuellement séparés (22, 23), disposés l'un à la suite de l'autre, et dans lesquels un élément d'aimant permanent mutuellement séparé (08, 18) est à chaque fois logé.

15. Moteur segmenté selon une des revendications de 1 à 14, **caractérisé en ce que** le rotor (03) est fabriqué à partir d'une matière synthétique et les évidements (22) présentent vers le côté frontale du rotor (03) des sections transversales terminales fermées.

16. Moteur segmenté selon une des revendications de 1 à 14, **caractérisé en ce que** le rotor (03a) est fabriqué à partir d'un métal léger, en particulier en aluminium, et les évidements (23) présentent vers le côté frontale du rotor des sections transversales terminales ouvertes qui sont fermées par des éléments électriquement non conducteurs (16a).

17. Moteur segmenté selon une des revendications de 1 à 16, **caractérisé en ce que** le circuit magnétique (10) est construit à partir d'une coulasse extérieure fixe (11) qui est agencée sur le côté extérieur de la section de paroi (09) du rotor (03) portant les éléments d'aimants permanents (08), et à partir d'une coulasse intérieur fixe (12) qui est agencée sur le côté intérieur de la section de paroi (09) du rotor (03) portant les éléments d'aimants permanents (08).

18. Moteur segmenté selon la revendication 17, **caractérisé en ce que** l'on prévoit sur la coulasse extérieure (11) et/ou sur la coulasse intérieure (12) au moins un élément d'appui en saille, notamment une lamelle en saille (11 a) qui traverse la cavité rotor (03) et qui vient an appui sur la coulasse extérieure (11) et/ou coulasse intérieure (12) opposée.

19. Moteur segmenté selon une des revendications de 1 à 16, **caractérisé en ce que** le circuit magnétique (46) se compose d'une coulasse extérieure fixe (43), laquelle est agencée sur le côté extérieure de la section de paroi du rotor (44) portant les éléments d'aimants permanents (08, 47), et d'au moins un élément à flux magnétique (45, 48), notamment en forme de coulasse, étant fixé sur le rotor (44).

20. Moteur segmenté selon une des revendications de 1 à 19, **caractérisé en ce que** l'on prévoit au moins une coulasse adjacente (19) sur la coulasse extérieure (11), avec laquelle le rotor (03) peut être magnétiquement fixé dans une position de fin de couse.

21. Moteur segmenté selon une des revendications de 1 à 20, **caractérisé en ce que** le circuit magnétique (10), notamment la coulasse extérieure (11) et/ou la coulasse intérieure (12) et/ou la coulasse adjacente (19) et/ou l'élément à flux magnétique (45, 48) présente au moins à chaque fois un paquet constitué de tôles à lamelles en fer doux.

22. Moteur segmenté selon une des revendications de 1 à 21, **caractérisé en ce que** l'on prévoit pour l'excitation d'un circuit magnétique (33) deux bobines d'excitation (36) pouvant être exploitées notamment soit de façon synchrone ou indépendamment l'une de l'autre.

23. Moteur segmenté selon une des revendications de 1 à 22, **caractérisé en ce que** le moteur segmenté (37, 41) présente deux ou plusieurs circuits magnétiques (40, 46), en particulier des circuits magnétiques susceptibles de pouvoir être excités soit de façon synchrone ou indépendamment l'un de l'autre.

24. Moteur segmenté selon la revendication 23, **caractérisé en ce que** plusieurs circuits magnétiques (46) sont affectés à une section de paroi commune du rotor (44) portant les éléments d'aimants permanents (08, 47).

25. Moteur segmenté selon la revendication 23, **caractérisé en ce que** plusieurs circuits magnétiques (40), notamment superposés, sont affectés à des sections de paroi séparées du rotor (38) et portant chacune individuellement des éléments d'aimants permanents (08).

26. Moteur segmenté selon une des revendications de 1 à 25, **caractérisé en ce que** les éléments d'aimants permanents (08) espacés entre eux sont incorporés en un matériau de base (19).

27. Moteur segmenté selon la revendication 26, **caractérisé en ce que** la distance (Δ_{PM}) entre les éléments d'aimants permanents adjacents (08b) est considérablement inférieure par rapport à la largeur (L_{PM}) des éléments d'aimants permanents (08b), en particulier inférieure à 20% de la largeur (L_{PM}) des éléments d'aimants permanents (08b).

28. Moteur segmenté selon la revendication 26 ou 27, **caractérisé en ce que** la distance (Δ_{PM}) entre des éléments d'aimants permanents sélectionnés ou tous les éléments d'aimants permanents adjacents est égale à zéro.

29. Moteur segmenté selon une des revendications de 1 à 28, **caractérisé en ce que** les éléments d'aimants permanents avec une orientation opposée (aimant P multipolaire) sont rassemblés dans une section de paroi.

30. Moteur segmenté selon une des revendications de 1 à 29, **caractérisé en ce que** la largeur (L_{PM}) des éléments d'aimants permanents (08b) est supérieure ou inférieure, dans la direction de mouvement (28, 31), à la section transversale du circuit magnétique affectés (10), notamment à la largeur de la coulasse extérieure (11) et/ou de la coulasse intérieure (12) affectée.

31. Moteur segmenté selon une des revendications de 1 à 30, **caractérisé en ce que** l'on prévoit plusieurs éléments d'aimants permanents (08, 18), en particulier de deux à quatre éléments par circuit magnétique (10), dans la direction de mouvement (28, 31), positionnés un derrière l'autre sur le rotor (03).

32. Moteur segmenté selon une des revendications de 1 à 31, **caractérisé en ce que** des éléments d'aimant permanents consécutifs (08, 18) présentent une orientation opposée des pôles de magnétisation (N/S fait suite à S/N et vice-versa).

33. Moteur segmenté selon une des revendications de 1 à 32, **caractérisé en ce que** des éléments d'aimants permanents ayant la même orientation entre le pôle nord et le pôle sud d'un circuit magnétique sont agencés à proximité de la position de fin de course de la section de paroi portant les éléments d'aimants permanents.

34. Moteur segmenté selon une des revendications de 1 à 33, **caractérisé en ce que** l'on prévoit des éléments d'aimants permanents ayant des largeurs différentes, en particulier **en ce que** les éléments d'aimants permanents entre les circuits magnétiques sont plus longs que les aimants à gauche et à droite du circuit magnétique.

35. Moteur segmenté selon une des revendications de 1 à 34, **caractérisé en ce que** les profondeurs de montage (Aₚ) des éléments d'aimants permanents sont positionnées asymétriquement par rapport au centre du pôle de la coulasse au niveau des positions de fin de course.

36. Moteur segmenté selon une des revendications de 1 à 35, **caractérisé en ce que** le moteur segmenté (01, 32, 37, 41, 50, 53, 56) est une partie d'une commande de soupape destinée à actionner une soupape (55) dans un moteur à combustion.

37. Moteur segmenté selon la revendication 35, **caractérisé en ce que** le moteur segmenté, lors de l'actionnement de la soupape, est déplacé en alternance entre deux positions de fin de course, auquel cas le moteur segmenté est conçu de telle sorte que la force d'entrainement (62, 63) du moteur segmentés sans inversion de l'excitation du circuit magnétique, lors du mouvement à partir de la première position de fin de course vers la deuxième position de fin de course et vice versa, subit une inversion de direction de la force au niveau d'un point d'inversion (U)..

38. Moteur segmenté selon la revendication 36, **caractérisé en ce que** le moteur segmenté est conçu de telle sorte que la courbe de force (62, 63) de la force d'entraînement entre les deux positions de fin de course passe asymétriquement par rapport au point d'inversion (U).

39. Moteur segmenté selon une des revendications de 35 à 37, **caractérisé en ce que**, dans la commande de soupape, deux moteurs segmentées (32, 37, 53) adjacents ou superposés, notamment bons conducteurs de chaleur par l'intermédiaire de vis, sont fixés sur le bloc moteur du moteur à combustion.

40. Moteur segmenté selon une des revendications de 35 à 38, **caractérisé en ce que**, dans la commande de soupape, deux moteurs segmentés (50, 53) superposés sont fixés sur le bloc moteur du moteur à combustion.

41. Moteur segmenté selon la revendication 39 ou 40, **caractérisé en ce qu'**un élément fonctionnel du moteur, notamment une bougie d'allumage ou une bougie à incandescence ou une soupape d'injection est agencé entre les moteurs segmentés (53) adjacents ou superposés.

42. Moteur segmenté selon la revendication 1, **caractérisé en ce que** les moteurs segmentés (01) consécutifs présentent un axe de palier commun (07) pour le logement des différents rotors (03).

43. Moteur segmenté selon une des revendications de 35 à 42, **caractérisé en ce que** les moteurs segmentés (50) présentent des surfaces de contact (52), notamment planes, respectivement tournées l'une vers l'autre, qui viennent s'appuyer l'une à l'autre lors du montage.

44. Moteur segmenté selon une des revendications de 35 à 43, **caractérisé en ce que** l'on prévoit, dans le moteur segmenté (01), au moins un capteur (25) permettant de déterminant la position du rotor (03).

45. Moteur segmenté selon une des revendications de 35 à 44, **caractérisé en ce que** l'on prévoit sur la commande de soupape, notamment sur le moteur segmenté, des dispositifs de refroidissement pour l'évacuation de la chaleur, notamment des ailettes de refroidissement et/ou des canaux de refroidissement (61) pour le passage d'un fluide de refroidissement.

46. Moteur segmenté selon une des revendications de 35 à 45, **caractérisé en ce que** la force d'entraînement du moteur segmenté avec un rapport de transmission variable est transmise par un bras de levier d'actionnement, sur lequel est exercée la force d'entraînement du moteur segmenté, à un bras de levier d'actionnement, sur lequel est induite la force d'entraînement du moteur segmenté, sur une commande soupape située en aval.

47. Moteur segmenté selon la revendication 46, **caractérisé en ce qu'**une soupape d'échappement est actionnée avec le moteur segmenté et l'on prévoit un rapport de transmission supérieur à 1, notamment un rapport de transmission de 1,1 à 1,4.

48. Moteur segmenté selon la revendication 46, **caractérisé en ce qu'**une soupape d'admission est actionnée avec le moteur segmenté et l'on prévoit un rapport de transmission inférieur à 1, notamment un rapport de transmission de 0,6 à 0,9.

49. Moteur segmenté selon une des revendications de 1 à 35, **caractérisé en ce que** le moteur segmenté (56b) constitue une partie d'une commande de clapet pour l'actionnement d'un clapet de réglage (58).

50. Moteur segmenté selon une des revendications de 1 à 35, **caractérisé en ce que** le moteur segmenté (56c) est une partie d'un dispositif d'entraînement d'essuie-glace pour l'actionnement d'un essuie-glace (59).

51. Moteur segmenté selon une des revendications précédentes, **caractérisé en ce que** les bobines d'excitation incorporées dans le stator sont des bobines formées ou stratifiées multicouches.

52. Moteur segmenté selon la revendication 51, **caractérisé en ce que** la bobine formée ou stratifiée affectée à une coulasse présente sur les deux côtés de la coulasse des dimensions différentes, notamment en termes de largeurs, auquel cas les côtés frontaux contigus des couches individuelles de la bobine formée ou stratifiée sont soudés l'un à l'autre.

53. Moteur segmenté selon une des revendications précédentes, **caractérisé en ce que** le logement de stator présente des canaux de refroidissement (101).

54. Moteur segmenté selon une des revendications précédentes, **caractérisé en ce qu'**au moins deux plaques mutuellement espacées (105, 106; 105 ', 106') sont agencées fixes en rotation sur un arbre (116, 116') qui porte les aimants permanents (103, 103').

55. Moteur segmenté selon une des revendications précédentes, **caractérisé en ce que** des éléments de renforcement (124) sont agencés sur les côtés frontaux et/ou côtés extérieures des éléments d'aimants permanents (103).

56. Moteur segmenté selon une des revendications précédentes, **caractérisé en ce que** les éléments d'aimants permanents sont agencés dans des logements, ou bien des coquilles (163), lesquels présentent notamment des ouvertures en fenêtre pour le flux magnétique.

57. Moteur segmenté selon la revendication 55, **caractérisé en ce que** les logements, ou bien les coquilles (163) s'appuient sur les plaques (105, 106; 105 ', 106').

58. Moteur segmenté selon une des revendications précédentes, **caractérisé en ce que** les éléments d'aimants permanents sont mutuellement espacés à l'aide de passerelles, par l'intermédiaire desquelles a lieu une compensation d'une variation de longueur de température entre les aimants permanents et les plaques.

59. Moteur segmenté selon la revendication 57, **caractérisé en ce que** les passerelles sont réalisées en plusieurs parties en direction axiale.

60. Moteur segmenté selon une des revendications précédentes, **caractérisé en ce que** le rotor est agencé fixe en rotation sur un arbre ou est en contact par l'intermédiaire d'un engrenage avec un organe de réglage, notamment un clapet d'étranglement.

61. Moteur segmenté selon une des revendications précédentes, **caractérisé en ce que** le moteur segmenté présente deux rotors (173, 175) portant des éléments d'aimants permanents (174, 176), ces rotors (173, 175) étant logés rotatifs sur un arbre et étant actionnables par l'intermédiaire de deux stators, ou bien étages magnétiques (170, 172), mutuellement séparés.

62. Moteur segmenté selon la revendication 60, **caractérisé en ce que** les étages magnétiques (170, 172) présentent respectivement un nombre de pôles et au moins une bobine d'excitation qui sont agencés dans un plan.

63. Moteur segmenté selon la revendication 60 ou 61, **caractérisé en ce que** un stator (172) pour générer une plus grande force, ou bien un plus grand couple de rotation, présente plusieurs pôles par rapport à l'autre stator (170).

64. Moteur segmenté selon une des revendications de 60 à 62, **caractérisé en ce que** dans une certaine zone d'angle de torsion un rotor (173) peut solliciter l'autre rotor (175) par la force par l'intermédiaire d'un élément à transmission de force (177).

65. Moteur segmenté selon une des revendications de 60 à 62, **caractérisé en ce que** le rotor (173) présente une butée, notamment dotée d'un élément amortisseur, auquel cas la butée limite la zone de torsion du rotor (173).

66. Moteur segmenté selon la revendication 63 ou 64, **caractérisé en ce que** le rotor qui sollicite l'autre par la force présente un plus grand rayon.

67. Moteur segmenté selon une des revendications de 60 à 65, **caractérisé en ce que** le rotor auxiliaire (173) dans la phase initiale du mouvement, notamment lors de l'ouverture ou fermeture d'un organe de réglage, exerce une force auxiliaire sur l'autre rotor (175).
